# EUROPEAN PATENT APPLICATION

(11) **EP 4 826 901 A1**
(43) Date of publication of application: **21.10.2026**
(21) Application number: 24923227.3
(22) Date of filing: 31.07.2024
(51) Int. Cl.: H01M 50/597, H01M 50/293, H01M 50/242

(54) **BATTERY AND ELECTRICAL DEVICE**

(30) Priority: 06.02.2024 CN 202420286242 U
(71) Applicant: Contemporary Amperex Technology Co., Limited, Ningde, Fujian 352100 (CN)
(72) Inventor: QIN, Lun, Ningde, Fujian 352100 (CN); GUO, Xinfei, Ningde, Fujian 352100 (CN); YANG, Hui, Ningde, Fujian 352100 (CN); WANG, Yong, Ningde, Fujian 352100 (CN); JIA, Jun, Ningde, Fujian 352100 (CN); WANG, Zengzhong, Ningde, Fujian 352100 (CN); WANG, Qing, Ningde, Fujian 352100 (CN)
(74) Representative: Ziebig Hengelhaupt Intellectual Property Attorneys Patentanwaltskanzlei PartGmbB
(86) International application number: PCT/CN2024/109042
(87) International publication number: WO 2025/167012

(57) **Abstract**

A battery (100) and an electrical device (1000). The battery (100) comprises a case assembly (20), a first heat exchange assembly (30), a battery cell assembly (101), and a first insulating member (71), wherein the case assembly (20) comprises a case (21); the first heat exchange assembly (30) comprises a first heat exchange member (31), the first heat exchange member (31) being fixed to a bottom wall (211) of the case (21); the battery cell assembly (101) is arranged in the case assembly (20), and the side of the battery cell assembly (101) that faces the bottom wall (211) of the case (21) is bonded to the bottom wall (211) of the case (21) and the first heat exchange member (31) by means of a first bonding layer (34); and the first insulating member (71) is at least partially arranged between the battery cell assembly (101) and the side of the first heat exchange member (31) that faces away from the bottom wall (211) of the case (21), the first bonding layer (34) covering the first insulating member (71). While achieving insulation between the battery cell assembly (101) and the first heat exchange member (31), the technical solution does not affect the continuous fitting arrangement between the first bonding layer (34) and the battery cell assembly (101), such that the reliability of the connection fit can be improved, enhancing the overall structural strength of the battery (100), and thus improving the reliability of the battery (100).

## Description

### CROSS-REFERENCE TO RELATED APPLICATIONS

The present application is based on and claims priority to Chinese patent application No. 202420286242.0 filed on February 06, 2024, which is incorporated herein by reference in its entirety.

### TECHNICAL FIELD

The present application relates to the field of batteries, and in particular to a battery and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, the battery technology is also an important factor related to their development.

For batteries in related technologies, the reliability of the batteries needs further improvement.

### SUMMARY OF THE INVENTION

In view of the above problems, the present application provides a battery and an electrical apparatus, which can reduce corrosion problems and have higher reliability.

In a first aspect, the present application provides a battery, the battery including a box body assembly, a first heat exchange assembly, a battery cell assembly, and a first insulating member, where the box body assembly includes a box body, and the box body has a bottom wall and an enclosure; the first heat exchange assembly is arranged inside the box body and includes a first heat exchange member, and the first heat exchange member is fixed to the bottom wall of the box body; the battery cell assembly is arranged inside the box body assembly, and a side of the battery cell assembly facing the bottom wall of the box body is bonded to the bottom wall of the box body and the first heat exchange member by a first bonding layer; and the first insulating member is at least partially arranged between a side of the first heat exchange member facing away from the bottom wall of the box body and the battery cell assembly, and the first bonding layer covers the first insulating member.

In the technical solution according to an embodiment of the present application, by bonding the battery cell assembly to the bottom wall of the box body and the first heat exchange member, the battery cell assembly and the first heat exchange member can be fixed in the box body, and the first heat exchange member is located at least partially between the bottom wall of the box body and a bottom of the battery cell assembly to reduce a heat transfer path, thereby being beneficial to improving heat exchange efficiency and improving performance of the battery. Furthermore, by arranging the first insulating member at least partially on the side of the first heat exchange member facing away from the bottom wall of the box body, insulation between the first heat exchange member and the battery cell assembly can be achieved to reduce corrosion problems caused by direct contact between the first heat exchange member and the battery cell assembly, thereby improving reliability of the battery. Furthermore, the first bonding layer covers the first insulating member, and therefore, insulation between the battery cell assembly and the first heat exchange member is achieved without affecting continuous fitting arrangement between the first bonding layer and the battery cell assembly. This can improve the reliability of the connection and fit, and enhance the overall structural strength of the battery, thereby improving the reliability of the battery.

In some embodiments, the first heat exchange member includes a heat exchange tube and a current collector, and the first insulating member is at least partially arranged between a side of the heat exchange tube facing away from the bottom wall of the box body and the battery cell assembly; and the current collector is connected to the heat exchange tube. In the above technical solution, the first heat exchange member is configured to include the heat exchange tube and the current collector, material consumption of the heat exchange tube can be reduced compared to the double-layer brazed cold plate structure, thereby significantly reducing material costs, and the current collector can act as a bus, thus facilitating the connection of the heat exchange tube to a thermal management assembly of the battery.

In some embodiments, the first insulating member wraps around an outer peripheral wall of the heat exchange tube. By wrapping around the outer peripheral wall of the heat exchange tube with the first insulating member, insulation can be achieved between the heat exchange tube and the battery cell assembly, and between the heat exchange tube and the bottom wall of the box body, thereby reducing corrosion problems caused by direct contact between the heat exchange tube and the battery cell assembly and between the heat exchange tube and the bottom wall of the box body. On the other hand, there is no need to consider an arrangement area and a specific arrangement position of the first insulating member, which can reduce the difficulty of arranging the first insulating member and thus improve production efficiency.

In some embodiments, the heat exchange tube is a flat tube, and two walls of the flat tube arranged opposite each other in a thickness direction are respectively connected to the battery cell assembly and the bottom wall of the box body assembly. In the above technical solution, the heat exchange tube is configured to include the flat tube. On the basis of reducing the material cost, on the one hand, it can increase a contact area between the heat exchange tube and the battery cell assembly, improve the heat exchange efficiency, and thus improve the reliability of the battery. On the other hand, the flat tube occupies less space, which is conducive to increasing the capacity of the battery and reducing the weight, volume, and cost of the battery.

In some embodiments, the heat exchange tube includes a first tube segment and a second tube segment, one end of the first tube segment is bendingly connected to one end of the second tube segment, and the other end of the second tube segment is connected to the current collector; where the first insulating member includes a first insulating portion and a second insulating portion, the first insulating portion is arranged between a side of the first tube segment facing away from the bottom wall of the box body and the battery cell assembly, and the second insulating portion is arranged between a side of the second tube segment facing away from the bottom wall of the box body and the battery cell assembly. In the above technical solution, the heat exchange tube is configured to include the first tube segment and the second tube segment that are bendingly connected. This allows the heat exchange tube to form a bent structure, thereby increasing a contact area between the heat exchange tube and the battery cell assembly, improving the heat exchange efficiency of the heat exchange tube, making a temperature of the battery cell assembly more uniform, and further improving the reliability of the battery. Furthermore, by arranging the first insulating portion on the first tube segment and arranging the second insulating portion on the second tube segment, insulation can be achieved between the first tube segment and the battery cell assembly, and between the second tube segment and the battery cell assembly, thereby reducing corrosion problems caused by direct contact between the heat exchange tube and the battery cell assembly, and further improving.

In some embodiments, the first insulating portion wraps around an outer peripheral wall of the first tube segment. By wrapping around the outer peripheral wall of the first tube segment with the first insulating portion, insulation can be achieved between the first tube segment and the battery cell assembly, and between the first tube segment and the bottom wall of the box body, thereby reducing corrosion problems caused by direct contact between the first tube segment and the battery cell assembly and between the first tube segment and the bottom wall of the box body. On the other hand, there is no need to consider an arrangement area and a specific arrangement position of the first insulating portion, which can reduce the difficulty of arranging the first insulating portion and thus improve production efficiency.

In some embodiments, the second insulating portion wraps around an outer peripheral wall of the second tube segment. By wrapping around the outer peripheral wall of the second tube segment with the second insulating portion, insulation can be achieved between the second tube segment and the battery cell assembly, and between the second tube segment and the bottom wall of the box body, thereby reducing corrosion problems caused by direct contact between the second tube segment and the battery cell assembly and between the second tube segment and the bottom wall of the box body. On the other hand, there is no need to consider an arrangement area and a specific arrangement position of the second insulating portion, which can reduce the difficulty of arranging the second insulating portion and thus improve production efficiency.

In some embodiments, the first tube segment includes a plurality of first heat exchange portions, and the plurality of first heat exchange portions are arranged at intervals in a first direction and sequentially bendingly connected. In the above technical solution, on the one hand, by arranging the plurality of first heat exchange portions, a heat exchange area of the first tube segment can be increased, thereby increasing the heat exchange area of the first tube segment and improving heat exchange effect of the first tube segment. On the other hand, inner battery cells are wrapped by outer battery cells, the inner battery cells have a small temperature difference. Therefore, by arranging the plurality of first heat exchange portions, the overall heat exchange effect can be improved while increasing the small temperature difference between the inner and outer battery cells.

In some embodiments, the first tube segment further includes a first bent portion, and the first bent portion is arc-shaped and is bendingly connected between two adjacent first heat exchange portions. In the above technical solution, by arranging the first bent portion, a direction of fluid flow inside the first tube segment can be changed, and a smooth transition connection between the two first heat exchange portions can be achieved, thereby realizing a detour arrangement of the first tube segment. As a result, a contact area between a single battery cell and the first tube segment can be increased, thereby increasing the heat exchange area and improving heat exchange efficiency of the first tube segment. Meanwhile, the first bent portion is arc-shaped, which can reduce flow resistance of the fluid and reduce pressure drop, thereby increasing a flow rate of the fluid and further increasing the heat exchange efficiency of the first tube segment. In addition, the arrangement of the first bent portion makes the structure of the first tube segment more compact and occupies less overall space, which is more conducive to realizing miniaturization of the battery and improves a volumetric energy density of the battery.

In some embodiments, the first heat exchange portion extends in a second direction, and the second tube segment is arranged on the same side of a plurality of first tube segments and extends in the first direction. In the above technical solution, the second tube segment is arranged on the same side of a plurality of first tube segments. On the one hand, the second tube segment can be used to connect the current collector and the first tube segments together, thereby realizing circulatory flow of the heat exchange fluid. On the other hand, space between the current collector and the plurality of first tube segments is effectively utilized, which can improve the space utilization rate while increasing the heat exchange area and improving the heat exchange efficiency.

In some embodiments, the second tube segment is bent to form a U-shaped region, and the first tube segment is bendingly arranged in the U-shaped region. In the above embodiment, by bending the second tube segment to form the U-shaped region, and bending the first tube segment to be arranged in the U-shaped region, when the first heat exchange member exchanges heat with the battery cell assembly, the U-shaped region formed by the outer second tube segment can be aligned with outer battery cells of the battery, and the first tube segment within the U-shaped region can be aligned with inner battery cells. This allows the first heat exchange member to compensate for a temperature difference between the inner and outer battery cells caused by heat exchange between the outer battery cells and the environment, so that the heat exchange effects of the outer battery cells of the battery cell assembly and the inner battery cells of the battery cell assembly are more consistent, thereby improving the temperature uniformity of the battery, and thus improving the service life of the battery to a certain extent.

In some embodiments, the heat exchange tube further includes a third tube segment. The first tube segment is connected between the third tube segment and the second tube segment, one end of the third tube segment is connected to the other end of the first tube segment, and the other end of the third tube segment is connected to the current collector. The first insulating member includes a third insulating portion, and the third insulating portion is arranged at least partially between a side of the third tube segment facing away from the bottom wall of the box body and the battery cell assembly. In the above technical solution, the heat exchange tube is configured to include the first tube segment, the second tube segment, and the third tube segment. On the one hand, the heat exchange tube can be connected to the thermal management assembly of the battery, and on the other hand, this allows the heat exchange tube to form a bent structure, thereby increasing a contact area between the heat exchange tube and the battery cell assembly, improving the heat exchange efficiency of the heat exchange tube, making a temperature of the battery cell assembly more uniform, and further improving the reliability of the battery. Furthermore, by arranging the third insulating portion on the third tube segment, insulation can be achieved between the third tube segment and the battery cell assembly, and between the third tube segment and the battery cell assembly, thereby reducing corrosion problems caused by direct contact between the heat exchange tube and the battery cell assembly, and further improving.

In some embodiments, the third insulating portion wraps around an outer peripheral wall of the third tube segment. By wrapping around the outer peripheral wall of the third tube segment with the third insulating portion, insulation can be achieved between the third tube segment and the battery cell assembly, and between the third tube segment and the bottom wall of the box body, thereby reducing corrosion problems caused by direct contact between the third tube segment and the battery cell assembly and between the third tube segment and the bottom wall of the box body. On the other hand, there is no need to consider an arrangement area and a specific arrangement position of the third insulating portion, which can reduce the difficulty of arranging the third insulating portion and thus improve the production efficiency.

In some embodiments, there is one or a plurality of heat exchange tubes. When there are a plurality of heat exchange tubes, the plurality of heat exchange tubes are arranged at intervals in the first direction or arranged around each other. In the above technical solution, arranging the plurality of heat exchange tubes at intervals in the first direction or around each other can improve the overall integrity of the plurality of heat exchange tubes in the first heat exchange member, increase diversity of the heat exchange tubes, and enable the first heat exchange member to better adapt to needs of battery cell assemblies with different arrangement forms. The overall structure of the first heat exchange member can be arranged more flexibly and compactly, so that the first heat exchange member can better meet the heat exchange area requirements of battery cells at different positions in the battery cell assembly.

In some embodiments, the bottom wall of the box body has an accommodating groove, the first heat exchange member is at least partially arranged in the accommodating groove, and the first bonding layer at least partially fills the accommodating groove. In the above technical solution, providing the accommodating groove can, on the one hand, position the heat exchange tube, reduce the risk of shaking of the heat exchange tube, and improve mounting stability and reliability of the heat exchange tube, thereby improving the reliability of the battery. On the other hand, it can increase a connection area between the heat exchange tube and the bottom wall of the box body, thereby improving the reliability of the heat exchange tube being fixed on the box body. In addition, the battery cell assembly can be in contact with the bottom wall of the box body and the heat exchange tube, the heat exchange efficiency can thus be improved, thereby further enhancing the reliability of the battery. In addition, the accommodating groove is provided on the bottom wall of the box body, so that the bottom wall of the box body has a concave-convex structure, which can improve structural strength of the box body. The heat exchange tube is arranged in the accommodating groove, which is equivalent to a reinforcing structure of the box body, thereby being capable of further improving the structural strength of the box body.

In some embodiments, an inner surface of the bottom wall of the box body has a mounting region for placing the battery cell assembly; the battery further includes: a second insulating member, at least partially arranged in the mounting region excluding the accommodating groove, such that the second insulating member is arranged between the bottom wall of the box body and the battery cell assembly, and the first bonding layer is arranged in the mounting region to cover the second insulating member. In the above technical solution, arranging the second insulating member in the mounting region excluding the accommodating groove can achieve insulation between the bottom wall of the box body and the battery cell assembly, reduce the corrosion problems caused by direct contact between the bottom wall of the box body and the battery cell assembly, and thus improve the reliability of the battery. Furthermore, the first bonding layer covers the second insulating member, and therefore, insulation between the bottom wall of the box body and the battery cell assembly is achieved without affecting the arrangement of the first bonding layer, thereby improving the reliability of the connection.

In some embodiments, the box body is provided with a first expansion beam and a second expansion beam, the first expansion beam and the second expansion beam are arranged opposite to each other, and each of the first expansion beam and the second expansion beam has a cavity. The mounting region is located between the first expansion beam and the second expansion beam, and the battery cell assembly is located between the first expansion beam and the second expansion beam. In the above technical solution, by arranging the first expansion beam and the second expansion beam, when the battery cell of the battery cell assembly has an expansion tendency, the first expansion beam and the second expansion beam abut against the battery cell assembly, and deformation of the cavities of the first expansion beam and the second expansion beam is utilized to absorb and transmit an expansion force, thereby reducing the probability of the battery cell deforming due to the expansion force.

In some embodiments, a thickness of the first bonding layer at a position excluding the accommodating groove is 0.5 mm to 2 mm. In the above technical solution, by defining the thickness of the first bonding layer at the position excluding the accommodating groove to meet the above condition, the first bonding layer can fully cover the first insulating member and the second insulating member, which can improve the connection reliability between the first insulating member and the battery cell assembly, and between the second insulating member and the battery cell assembly, thereby improving the connection reliability between the bottom wall of the box body and the battery cell assembly, and between the first heat exchange member and the battery cell assembly, and further improving the reliability of the battery.

In some embodiments, a second bonding layer is arranged between a side of the first heat exchange member facing away from the battery cell assembly and the bottom wall of the box body. In the above technical solution, by arranging the second bonding layer, the first heat exchange member can be pre-fixed in the box body, thereby facilitating mounting of the remaining components.

In some embodiments, the box body is an integrally stamped member. In the above technical solution, since the bottom wall and the enclosure of the box body are integrally stamped, there is no need to consider a sealing problem at a connection between the bottom wall and the enclosure, which can improve sealing effect. This can prevent mud and water from seeping into the box body from the connection between the bottom wall and the enclosure and affecting the battery cell assembly inside the box body, thereby improving the reliability of the battery. Furthermore, the integrally stamped box body does not require splicing, which on the one hand saves a large quantity of bolts on an original profile box body, reducing costs, and on the other hand eliminates connection steps, thereby improving the production efficiency. In addition, the integrally stamped box body can prevent a substance ejected from the battery during thermal runaway and a heat exchange fluid leaking from the first heat exchange assembly from flowing to the outside of the box body. This can reduce direct contact between the human body and the leaked substances, protect personal safety, and also reduce environmental pollution.

In some embodiments, the battery cell assembly includes a plurality of battery units, each of the battery units including a plurality of battery cells, the plurality of battery cells of each of the battery units being arranged in the first direction, the plurality of battery units being arranged in the second direction, and the first direction and the second direction being arranged to form an angle. The first heat exchange assembly further includes a second heat exchange member, the second heat exchange member being arranged between two adjacent battery units. In the above technical solution, by arranging the second heat exchange member, a contact area between the battery cell and the heat exchange assembly can be increased, thereby increasing the contact area between the battery cell assembly and the first heat exchange assembly, which can significantly improve the heat exchange efficiency and improve the reliability of the battery.

In some embodiments, the box body assembly further includes a box cover, the box cover being connected above the box body and having a top wall; the first heat exchange assembly further includes a third heat exchange member, the third heat exchange member being located at least partially between the top wall of the box cover and the battery cell assembly. In the above technical solution, by arranging the third heat exchange member, a contact area between the battery cell assembly and the first heat exchange assembly can be increased, which can significantly improve the heat exchange efficiency and improve the reliability of the battery.

In some embodiments, the battery further includes a second heat exchange assembly, and the second heat exchange assembly is attached externally to the box body assembly. In the above technical solution, by arranging the second heat exchange assembly externally to the box body, there is no need to consider problems such as insulation and corrosion prevention of the heat exchange member and the battery cells inside the box body. This simplifies the insulation and corrosion prevention design of the second heat exchange assembly, reduces the processing difficulty and production cost, solves a short circuit problem between the battery cells and the second heat exchange assembly, and improves the reliability of the battery. Moreover, by arranging the second heat exchange assembly externally to the box body assembly, the second heat exchange assembly does not occupy the space inside the box body, so that the capacity of the battery is not reduced due to the mounting of the heat exchange member, thus better improving the capacity of the battery.

In a second aspect, the present application provides an electrical apparatus, including the battery according to the above embodiment.

In the technical solution provided by the embodiment of the present application, the battery is adopted, which can improve the reliability of the electrical apparatus, and can further improve the production efficiency of the electrical apparatus and reduce costs.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

By reading detailed description of the preferred embodiments below, various other advantages and benefits will become apparent to those of ordinary skill in the art. The drawings are used for the purpose of illustrating the preferred embodiments only and are not to be considered a limitation to the present application. In addition, throughout the accompanying drawings, the same reference numeral is used to represent the same component. In the drawings:
FIG. 1 is a structural schematic diagram of a vehicle according to some embodiments of the present application;
FIG. 2 is an exploded structural diagram of a battery according to some embodiments of the present application;
FIG. 3 is a partially assembly diagram of a battery according to some embodiments of the present application from one perspective;
FIG. 4 is an exploded structural diagram of the battery shown in FIG. 3;
FIG. 5 is a top view of the battery shown in FIG. 3;
FIG. 6 is a sectional structural diagram of the battery shown in FIG. 3;
FIG. 7 is an enlarged view of a portion A shown in FIG. 6;
FIG. 8 is an enlarged view of a portion B shown in FIG. 7;
FIG. 9 is a schematic structural diagram of a first heat exchange member of a battery according to some embodiments of the present application;
FIG. 10 is a schematic structural diagram of a first heat exchange member of a battery according to other embodiments of the present application;
FIG. 11 is a schematic structural diagram of a first heat exchange member of a battery according to still other embodiments of the present application;
FIG. 12 is a schematic structural diagram of a first heat exchange member of a battery according to yet other embodiments of the present application;
FIG. 13 is a schematic structural diagram of a current collector of a battery according to some embodiments of the present application;
FIG. 14 is a sectional structural diagram of the current collector shown in FIG. 13;
FIG. 15 is a schematic structural diagram of the battery shown in FIG. 3 with a battery cell assembly removed;
FIG. 16 is an exploded diagram of the structure shown in FIG. 15;
FIG. 17 is a partially assembly diagram of a battery according to other embodiments of the present application;
FIG. 18 is a partially assembly diagram of a battery according to yet other embodiments of the present application;
FIG. 19 is a schematic structural diagram of battery cells and a second heat exchange member shown in FIG. 18; and
FIG. 20 is a partially assembly diagram of a battery according to yet other embodiments of the present application.

### Reference numerals in the Detailed Description:

Electrical apparatus 1000, Battery 100, Battery cell assembly 101, Battery unit 102, Controller 200, Motor 300;
Battery cell 10,
Box body assembly 20, Mounting region 201, Box body 21, Bottom wall 211, Enclosure 212, Accommodating groove 213, First groove segment 2131, Second groove segment 2133, Third groove segment 2134, Mounting groove 214, Box cover 22,
First heat exchange assembly 30, First heat exchange member 31, First inlet/outlet 3108, Second inlet/outlet 3109, Heat exchange tube 314, First tube segment 3141, First heat exchange portion 3142, First bent portion 3143, Second tube segment 3144, U-shaped region 3144a, Second heat exchange portion 3145, Second bent portion 3146, Third heat exchange portion 3147, Fourth heat exchange portion 3148, Third tube segment 3149, Current collector 315, Tube body 3151, First space 3151a, Second space 3151b, First flow channel interface 3152, Second flow channel interface 3153, Partition structure 3154, First partition plate 3154a, Second partition plate 3154b, Liquid inflow interface 3155, Liquid outflow interface 3156, Second heat exchange member 32, Third heat exchange member 33, First bonding layer 34, Second bonding layer 35, Second heat exchange assembly 40,
First fixed beam 51, Second fixed beam 52, Connecting beam 53, Expansion beam 60, First expansion beam 61, Second expansion beam 62, Clearance hole 6302, First insulating member 71, Second insulating member 72, First mounting beam 81, Second mounting beam 82, Bottom guard plate 90.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount", "connect", "connection", "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand thereof in the market is also constantly expanding.

In batteries of the related art, a liquid cooling plate is provided between the battery cell assembly and the bottom wall of the box body, and an insulating and thermally conductive pad is provided between the liquid cooling plate and the battery cell assembly. The insulating and thermally conductive pad and the battery cell assembly are connected together by a thermally conductive adhesive.

The insulating and thermally conductive pad has a plurality of deformation regions and a plurality of filling regions on a side facing the battery cell assembly. The plurality of deformation regions and the plurality of filling regions are arranged alternately. The filling regions are provided with permeation holes. Therefore, the thermally conductive adhesive located in the filling region enters the permeation holes, thereby fixing the liquid cooling plate, the insulating and thermally conductive pad, and the battery cell assembly together through the thermally conductive adhesive.

However, due to the discontinuous arrangement of the plurality of filling regions, the thermally conductive adhesive between the insulating and thermally conductive pad and the battery cell assembly is also discontinuous. As a result, a distribution area of the thermally conductive adhesive between the insulating and thermally conductive pad and the battery cell assembly is much smaller than a surface area of the insulating and thermally conductive pad. This leads to an unreliable connection between the insulating and thermally conductive pad and the battery cell assembly, and the insulating and thermally conductive pad and the battery cell assembly are prone to detachment. Furthermore, the insulating and thermally conductive pad and the liquid cooling plate are only connected through the thermally conductive adhesive at the permeation holes, the connection is also unreliable, and the insulating and thermally conductive pad and the liquid cooling plate are prone to detachment.

Therefore, an embodiment of the present application proposes a battery in which a first insulating member is provided at least on a side of a first heat exchange member facing away from a bottom wall of a box body, and a first bonding layer covers the first insulating member. This achieves double insulation between the first heat exchange member and a battery cell assembly, reduces corrosion problems caused by direct contact between the first heat exchange member and the battery cell assembly, and allows the first bonding layer to be continuously provided, thereby enabling the first insulating member to be fully connected to the battery cell assembly, which is beneficial to improving the reliability of the battery.

The battery disclosed by the embodiment of the present application can be used in an electrical apparatus using the battery as a power source or various energy storage systems using the battery as an energy storage element. The electrical apparatus can be but not limited to mobile phones, tablet computers, notebook computers, electric toys, electric tools, electric vehicles, electric automobiles, ships, spacecraft and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

The following embodiments, for the convenience of illustration, take a vehicle being an electrical apparatus 1000 in one embodiment of the present application as an example to illustrate.

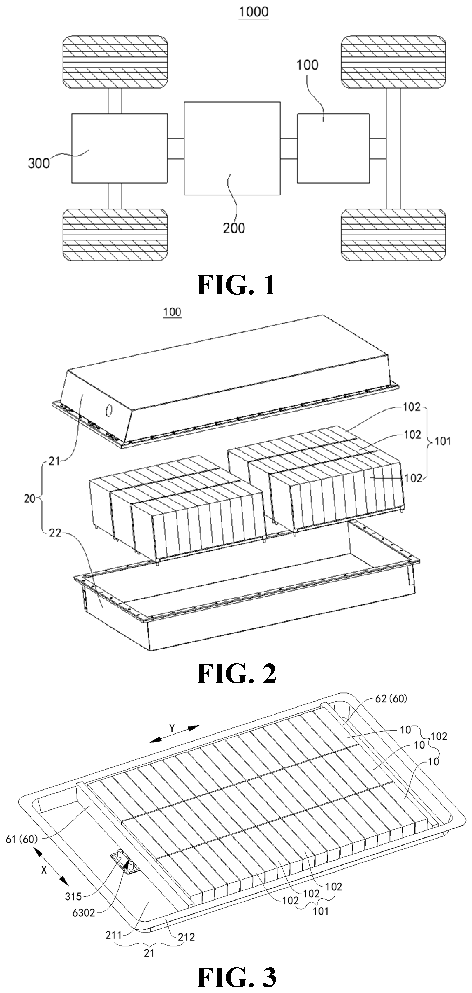

With reference to FIG. 1, FIG. 1 is a schematic structural diagram of a vehicle according to some embodiments of the present application. The vehicle may be a fuel vehicle, a gas vehicle or a new energy vehicle, and the new energy vehicle may be a all-electric vehicle, a hybrid electric vehicle, or an extended range electric vehicle and the like. A battery 100 is provided inside the vehicle. The battery 100 may be provided at the bottom, or head, or tail of the vehicle. The battery 100 may be used to power the vehicle. For example, the battery 100 may be used as an operating power source of the vehicle. The vehicle may further include a controller 200 and a motor 300. The controller 200 is used to control the battery 100 to supply power to the motor 300, for example, for the operating power demand when the vehicle is starting, navigating, and driving.

In some embodiments of the present application, the battery 100 can be used as an operation power supply of the vehicle, can also be used as a driving power supply of the vehicle, and replaces or partially replaces fuel oil or natural gas to provide driving power for the vehicle.

Referring to FIG. 2, FIG. 2 is an exploded diagram of a battery 100 according to some embodiments of the present application. The battery 100 includes a box body assembly 20 and at least one battery cell assembly 101. The battery cell assembly 101 is accommodated within the box body assembly 20.

Here, the box body assembly 20 is configured to provide an accommodating space for a battery cell 10, and the box body assembly 20 may be of various structures. In some embodiments, the box body assembly 20 may include a box body 21 and a box cover 22, the box body 21 and the box cover 22 cover each other, and the box body 21 and the box cover 22 jointly define the accommodating space for accommodating the battery cell 10. The box body 21 may be a hollow structure with one opening end, the box cover 22 may be a platy structure, and the box cover 22 covers on the opening side of the box body 21, such that the box body 21 and the box cover 22 jointly define the accommodating space. Alternatively, the box body 21 and the box cover 22 may each be a hollow structure with one opening side, and the opening side of the box cover 22 covers on the opening side of the box body 21. Of course, the box body assembly 20 formed by the box body 21 and the box cover 22 may be of various shapes, such as a cylinder and a cuboid.

The battery cell assembly 101 may include a plurality of battery cells 10. The plurality of battery cells 10 may be connected in series, in parallel, or in parallel-series, and the parallel-series connection means that the plurality of battery cells 10 are connected in both series and parallel. The plurality of battery cells 10 may be directly connected in series, in parallel, or in parallel-series, and then the entirety formed by the plurality of battery cells 10 is accommodated in the box body assembly 20. Of course, the battery 100 may also be an entirety formed by connecting the plurality of battery cells 10 in series, in parallel, or in parallel-series to form battery 100 modules and then connecting the plurality of battery 100 modules in series, in parallel, or in parallel-series, and is then accommodated in the box body assembly 20. The battery 100 may further include other structures. For example, the battery 100 may further include a bus component for electrically connecting the plurality of battery cells 10.

Each battery cell 10 may be a secondary battery or a primary battery; and may also be a lithium-sulfur battery, a sodium-ion battery, or a magnesium-ion battery, but is not limited thereto. The battery cell 10 may be in a cylindrical, flat, or cuboid shape, or in other shapes, or the like.

The battery cell 10 includes a shell cover, a shell body, an electrode assembly, and other functional components.

The shell cover refers to a component that covers the opening of the shell body to isolate the internal environment of the battery cell 10 from the external environment. Without limitation, the shape of the shell cover may be adapted to the shape of the shell body to fit the shell body. Optionally, the shell cover may be made of a material (such as aluminum alloy) with a certain hardness and strength, and in this way, the shell cover is not easily deformed when being subjected to extrusion and collisions, such that the battery cell 10 is capable of having a higher structural strength, and the reliability can also be improved. A functional component such as the electrode terminal may be arranged on the shell cover. The electrode terminal can be configured to be electrically connected to the electrode assembly, for outputting or inputting electric energy from or into the battery cell 10. In some embodiments, the shell cover may be further provided with a pressure relief mechanism configured to relief an internal pressure when the internal pressure or temperature of the battery cell 10 reaches a threshold. The shell cover may be made of various materials, such as copper, iron, aluminum, stainless steel, aluminum alloy, and plastic, which is not particularly limited in the embodiments of the present application. In some embodiments, an insulating member may be further arranged on an inner side of the shell cover, and the insulating member may be configured to isolate an electrical connection component in the shell body from the shell cover, thereby reducing the risk of short circuit. For example, the insulating member may be made of plastic, rubber, and the like.

The shell body is an assembly configured to fit the shell cover to form the internal environment of the battery cell 10, where the formed internal environment can be used for accommodating the electrode assembly, an electrolyte solution, and other components. The shell body and the shell cover may be separate components, the shell body may be provided with an opening, and the internal environment of the battery cell 10 is formed by causing the shell cover to cover the opening at the opening. Without limitation, the shell cover and the shell body may also be integrated. Specifically, the shell cover and the shell body may form a common connecting surface before other components enter the shell. When the interior of the shell body is required to be encapsulated, the shell body is covered by the shell cover. The shell body may be of various shapes and dimensions, such as a cuboid, a cylinder, and a hexagonal prism. Specifically, the shape of the shell body may be determined according to the specific shape and dimension of the electrode assembly. The shell body may be made of various materials, such as copper, iron, aluminum, stainless steel, aluminum alloy, and plastic, which is not particularly limited in the embodiments of the present application.

The electrode assembly is a component of the battery cell 10 where an electrochemical reaction occurs. One or a plurality of electrode assemblies may be included within the shell body. The electrode assembly is mainly formed by winding or stacking a positive electrode plate and a negative electrode plate, and a separator is generally arranged between the positive electrode plate and the negative electrode plate. The portions, with active materials, of the positive electrode plate and the negative electrode plate constitute a main body part of the electrode assembly, and the portions, without the active materials, of the positive electrode plate and the negative electrode plate respectively constitute tabs. In a charging or discharging process of the battery 100, the positive active material and the negative active material react with the electrolytic solution, and the tabs are connected to the electrode terminal to form a current loop.

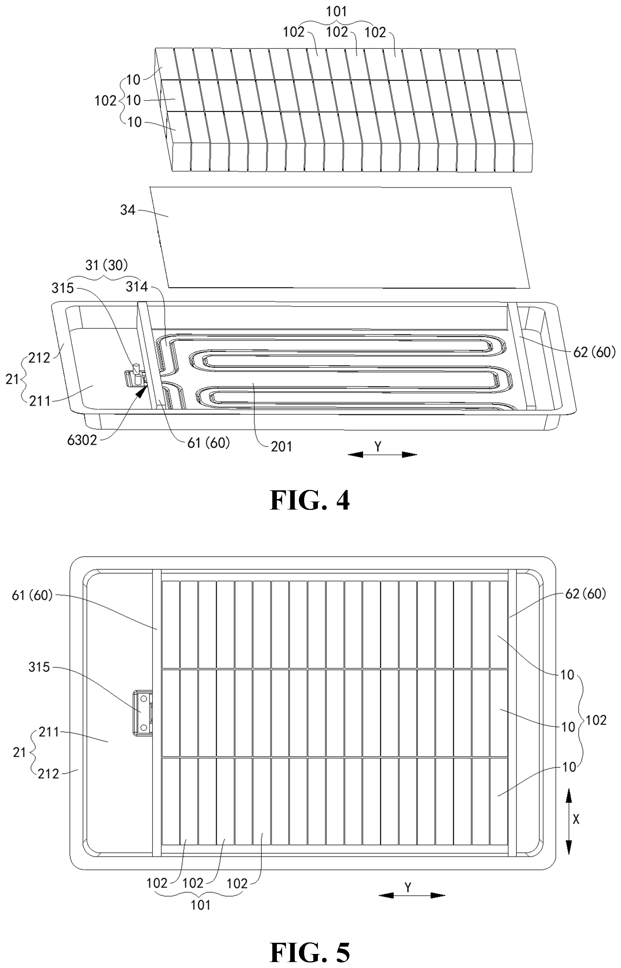

According to some embodiments of the present application, referring to FIG. 3 and FIG. 4, FIG. 3 is a partially assembly diagram of a battery 100 according to some embodiments of the present application from one perspective; and FIG. 4 is an exploded structural diagram of the battery 100 shown in FIG. 3. The battery 100 includes a box body assembly 20, a first heat exchange assembly 30 and a battery cell assembly 101, where the box body assembly 20 includes a box body 21, and the box body 21 has a bottom wall 211 and an enclosure 212; the first heat exchange assembly 30 and the battery cell assembly 101 are both arranged inside the box body 21, and the first heat exchange assembly 30 includes a first heat exchange member 31, and the first heat exchange member 31 is fixed to a bottom wall 211 of the box body 21; and a side of the battery cell assembly 101 facing the bottom wall 211 of the box body 21 is bonded to the bottom wall 211 of the box body 21 and the first heat exchange member 31 by a first bonding layer 34.

In other words, the first bonding layer 34 is provided between the bottom wall 211 of the box body 21 and the bottom of the battery cell assembly 101, and between the first heat exchange member 31 and the bottom of the battery cell assembly 101, so that the first heat exchange member 31 can be at least partially arranged between the bottom of the box body 21 and the bottom of the battery cell assembly 101. By arranging the first heat exchange member 31 in the box body assembly 20, the first heat exchange member 31 may be in direct contact with the battery cell assembly 101, thereby improving the heat exchange efficiency of the first heat exchange assembly 30 and further improving the reliability of the battery 100.

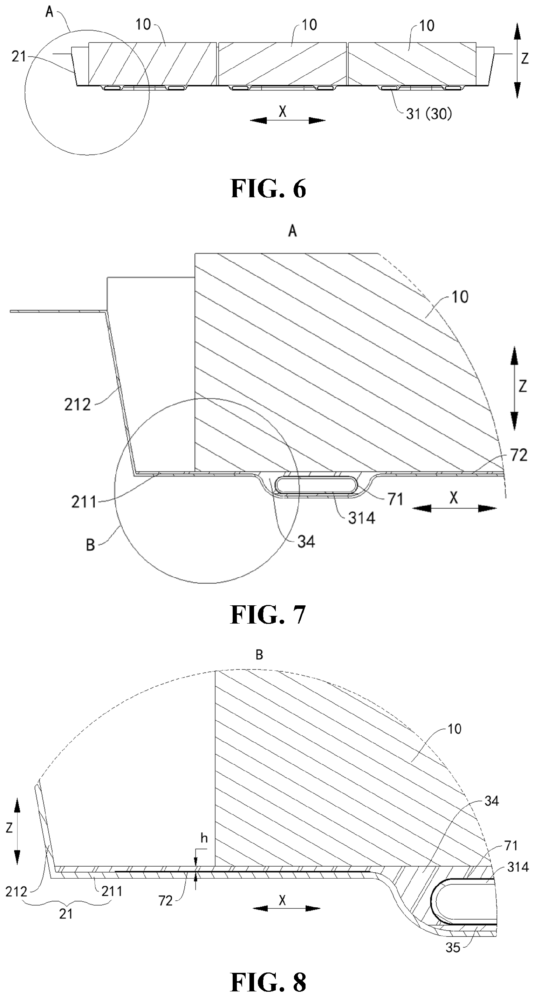

Further, referring to FIG. 5 to FIG. 8, FIG. 5 is a top view of the battery 100 shown in FIG. 3; FIG. 6 is a sectional structural diagram of the battery 100 shown in FIG. 3; FIG. 7 is an enlarged view of a portion A shown in FIG. 6; and FIG. 8 is an enlarged view of a portion B shown in FIG. 7. The box body assembly 20 further includes a first insulating member 71 at least partially arranged between a side of the first heat exchange member 31 facing away from the bottom wall 211 of the box body 21 and the battery cell assembly 101, the first bonding layer 34 covering the first insulating member 71.

Specifically, the first insulating member 71 can separate the first heat exchange member 31 from the battery cell assembly 101, while the first bonding layer 34 covers the first insulating member 71, so that the first insulating member 71 is connected to the battery cell assembly 101. The first insulating member 71 can be formed on an outer side of the first heat exchange member 31 by spraying, electrophoresis, or dip coating, bonded to the outer side of the first heat exchange member 31, or hot-pressed onto the outer side of the first heat exchange member 31.

In the technical solution according to the embodiment of the present application, by bonding the battery cell assembly 101 to the bottom wall 211 of the box body 21 and the first heat exchange member 31, the battery cell assembly 101 and the first heat exchange member 31 can be fixed in the box body 21, and the first heat exchange member 31 is located at least partially between the bottom wall 211 of the box body 21 and a bottom of the battery cell assembly 101 to reduce a heat transfer path, thereby being beneficial to improving heat exchange efficiency and improving performance of the battery 100. Furthermore, by arranging the first insulating member 71 at least partially on the side of the first heat exchange member 31 facing away from the bottom wall 211 of the box body 21, insulation between the first heat exchange member 31 and the battery cell assembly 101 can be achieved to reduce corrosion problems caused by direct contact between the first heat exchange member 31 and the battery cell assembly 101, thereby improving reliability of the battery 100.

Furthermore, the first bonding layer 34 covers the first insulating member 71, and therefore, insulation between the battery cell assembly 101 and the first heat exchange member 31 is achieved without affecting continuous fitting arrangement between the first bonding layer 34 and the battery cell assembly 101. This can improve the reliability of the connection and fit, and enhance the overall structural strength of the battery 100, thereby improving the reliability of the battery 100.

Referring to FIG. 4 and FIG. 7 to FIG. 8 again, the first heat exchange member 31 includes a heat exchange tube 314 and a current collector 315, and the first insulating member 71 is at least partially arranged between a side of the heat exchange tube 314 facing away from the bottom wall 211 of the box body 21 and the battery cell assembly 101; and the current collector 315 is connected to the heat exchange tube 314.

In the above technical solution, the first heat exchange member 31 is configured to include the heat exchange tube 314 and the current collector 315, material consumption of the heat exchange tube 314 can be reduced compared to the double-layer brazed cold plate structure, thereby significantly reducing material costs, and the current collector 315 can act as a bus, thus facilitating the connection of the heat exchange tube 314 to a thermal management assembly of the battery 100.

For example, as shown in FIG. 8, the first insulating member 71 wraps around an outer peripheral wall of the heat exchange tube 314. By wrapping around the outer peripheral wall of the heat exchange tube 314 with the first insulating member 71, insulation can be achieved between the heat exchange tube 314 and the battery cell assembly 101, and between the heat exchange tube 314 and the bottom wall 211 of the box body 21, thereby reducing corrosion problems caused by direct contact between the heat exchange tube 314 and the battery cell assembly 101 and between the heat exchange tube and the bottom wall 211 of the box body 21. On the other hand, there is no need to consider an arrangement area and a specific arrangement position of the first insulating member 71, which can reduce the difficulty of arranging the first insulating member 71 and thus improve production efficiency.

Referring to FIG. 7 and FIG. 8 again, the heat exchange tube 314 is a flat tube, and two walls of the flat tube arranged opposite each other in a thickness direction are respectively connected to the battery cell assembly 101 and the bottom wall 211 of the box body assembly 20. The two walls of the flat tube in the thickness direction have flat surfaces and a large contact area, which can increase the heat transfer area and thus increase the heat exchange effect of the first heat exchange member 31.

In the above technical solution, the heat exchange tube 314 is configured as the flat tube. On the basis of reducing the material cost, on the one hand, it can increase a contact area between the heat exchange tube 314 and the battery cell assembly 101, improve the heat exchange efficiency, and thus improve the reliability of the battery 100. On the other hand, the flat tube occupies less space, which is conducive to increasing the capacity of the battery 100 and reducing the weight, volume, and cost of the battery 100.

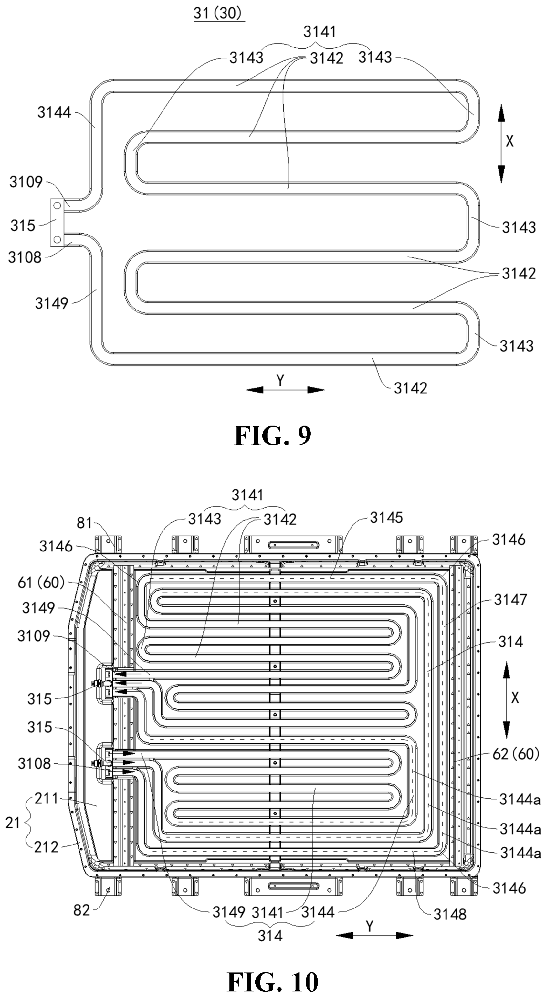

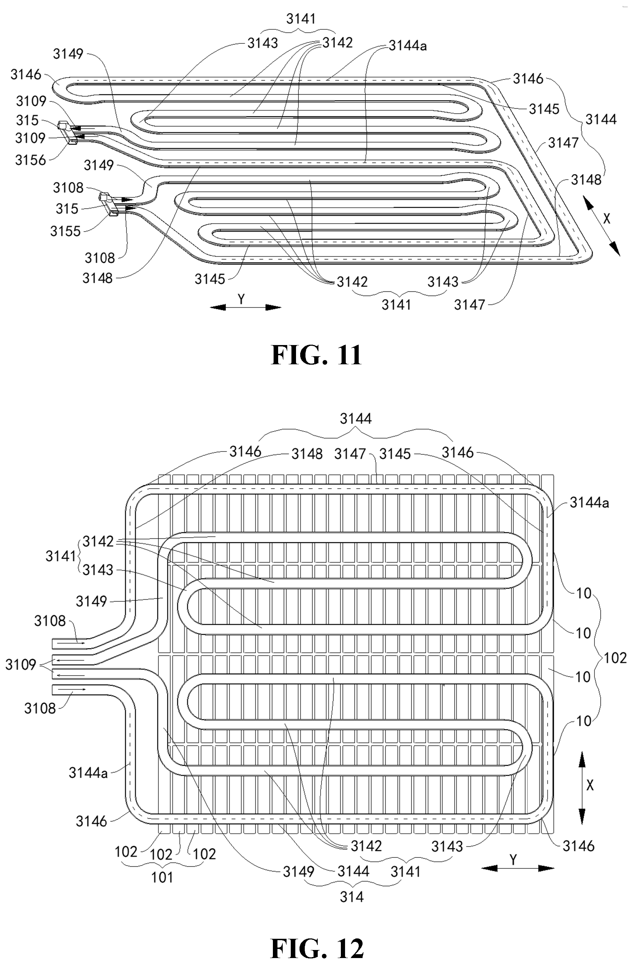

Referring to FIG. 9 to FIG. 12, FIG. 9 is a schematic structural diagram of the first heat exchange member 31 of the battery 100 according to some embodiments of the present application; FIG. 10 is a schematic structural diagram of the first heat exchange member 31 of the battery 100 according to other embodiments of the present application; FIG. 11 is a schematic structural diagram of the first heat exchange member 31 of the battery 100 according to still other embodiments of the present application; and FIG. 12 is a schematic structural diagram of the first heat exchange member 31 of the battery 100 according to yet other embodiments of the present application. The heat exchange tube 314 includes a first tube segment 3141 and a second tube segment 3144, one end of the first tube segment 3141 is bendingly connected to one end of the second tube segment 3144, and the other end of the second tube segment 3144 is connected to the current collector 315.

The first insulating member 71 includes a first insulating portion and a second insulating portion, the first insulating portion is arranged between a side of the first tube segment 3141 facing away from the bottom wall 211 of the box body 21 and the battery cell assembly 101, and the second insulating portion is arranged between a side of the second tube segment 3144 facing away from the bottom wall 211 of the box body 21 and the battery cell assembly 101.

In the above technical solution, the heat exchange tube 314 is configured to include the first tube segment 3141 and the second tube segment 3144 that are bendingly connected. This allows the heat exchange tube 314 to form a bent structure, thereby increasing a contact area between the heat exchange tube 314 and the battery cell assembly 101, improving the heat exchange efficiency of the heat exchange tube 314, making a temperature of the battery cell assembly 101 more uniform, and further improving the reliability of the battery 100.

Furthermore, by arranging the first insulating portion on the first tube segment 3141 and arranging the second insulating portion on the second tube segment 3144, insulation can be achieved between the first tube segment 3141 and the battery cell assembly 101, and between the second tube segment 3144 and the battery cell assembly 101, thereby reducing corrosion problems caused by direct contact between the heat exchange tube 314 and the battery cell assembly 101, and further improving.

For example, the first insulating portion wraps around an outer peripheral wall of the first tube segment 3141. By wrapping around the outer peripheral wall of the first tube segment 3141 with the first insulating portion, insulation can be achieved between the first tube segment 3141 and the battery cell assembly 101, and between the first tube segment 3141 and the bottom wall 211 of the box body 21, thereby reducing corrosion problems caused by direct contact between the first tube segment 3141 and the battery cell assembly 101 and between the first tube segment and the bottom wall 211 of the box body 21. On the other hand, there is no need to consider an arrangement area and a specific arrangement position of the first insulating portion, which can reduce the difficulty of arranging the first insulating portion and thus improve production efficiency.

For example, the second insulating portion wraps around an outer peripheral wall of the second tube segment 3144. By wrapping around the outer peripheral wall of the second tube segment 3144 with the second insulating portion, insulation can be achieved between the second tube segment 3144 and the battery cell assembly 101, and between the second tube segment 3144 and the bottom wall 211 of the box body 21, thereby reducing corrosion problems caused by direct contact between the second tube segment 3144 and the battery cell assembly 101 and between the second tube segment and the bottom wall 211 of the box body 21. On the other hand, there is no need to consider an arrangement area and a specific arrangement position of the second insulating portion, which can reduce the difficulty of arranging the second insulating portion and thus improve production efficiency.

Referring to FIG. 9 to FIG. 12, the first tube segment 3141 includes a plurality of first heat exchange portions 3142, the plurality of first heat exchange portions 3142 are arranged at intervals in a first direction, and the plurality of first heat exchange portions 3142 are sequentially bendingly connected.

In other words, the plurality of first heat exchange portions 3142 are connected in sequence, and a connection position of two connected first heat exchange portions 3142 is bent. For example, the two connected first heat exchange portions 3142 can be bent along a broken line or along an arc. The quantity of the first heat exchange portions 3142 may be two, three, four, five, or more.

It should be noted that the shape of the first heat exchange portion 3142 may be varied, for example, the first heat exchange portion 3142 may be in a shape of a straight line, an arc, or the like. An extension direction of the first heat exchange portion 3142 may also be varied, for example, it may extend in a length direction or a thickness direction of the battery cell 10. In this way, the plurality of first heat exchange portions 3142 are bendingly connected in sequence, so that the first tube segment 3141 is capable of forming an S-shaped form, a U-shaped form, a V-shaped form, and other forms.

In the above technical solution, on the one hand, by arranging the plurality of first heat exchange portions 3142, a heat exchange area of the first tube segment 3141 can be increased, thereby increasing the heat exchange area of the first tube segment 3141 and improving heat exchange effect of the first tube segment 3141. On the other hand, inner battery cells 10 are wrapped by outer battery cells 10, the inner battery cells 10 have a small temperature difference. Therefore, by arranging the plurality of first heat exchange portions 3142, the overall heat exchange effect can be improved while increasing the small temperature difference between the inner and outer battery cells 10.

Specifically, as shown in FIG. 12, for the battery cell assembly 101, an X direction in FIG. 12 is the width direction of the battery cell assembly 101, and a Y direction is the length direction of the battery cell assembly 101. For the battery cell 10, the X direction in FIG. 12 is the length direction of the battery cell 10, and the Y direction is the thickness direction of the battery cell 10. The battery cell assembly 101 includes a plurality of battery units 102, and the plurality of battery units 102 are arranged along a second direction. That is, the plurality of battery units 102 are stacked in the thickness direction of the battery cell 10. Each of the battery units 102 includes a plurality of battery cells 10, and the plurality of battery cells 10 of each of the battery units 102 are arranged in the first direction. That is, the plurality of battery cells 10 of each of the battery units 102 are stacked in the length direction of the battery cell 10.

The plurality of first heat exchange portions 3142 may be arranged in the first direction, and the first heat exchange portions 3142 extend in the second direction. The plurality of first heat exchange portions 3142 are sequentially connected end to end, thereby enabling the first tube segment 3141 to form a bent structure. In other words, the arrangement direction of the first heat exchange portion 3142 is set to form an angle with the arrangement direction of the plurality of battery units 102, and the arrangement direction of the first heat exchange portion 3142 is consistent with the arrangement direction of the plurality of battery cells 10 in each of the battery units 102.

In the above technical solution, by defining the arrangement direction of the plurality of first heat exchange portions 3142, some of the battery cells 10 of the battery 100 may be in contact with the plurality of first heat exchange portions 3142, and each first heat exchange portion 3142 may be in contact with some of the battery cells 10, thereby making the heat exchange of the plurality of battery cells 10 more uniform and improving the reliability of the battery 100.

Referring to FIG. 9 to FIG. 12, the plurality of first heat exchange portions 3142 are arranged at intervals in the first direction, and each first heat exchange portion 3142 extends linearly in the second direction, with the first direction and the second direction being arranged at an angle.

The statement that "the first direction and the second direction being arranged at an angle" is intended to indicate that the first direction and the second direction may be arranged perpendicularly or they may be arranged in a non-perpendicular manner that only intersects. For example, the first direction and the second direction may be arranged at an angle of 30°, 60°, 80°, 120°, 150°, or 170°. For example, as shown in FIG. 12, the first direction is the length direction of the battery cell 10, the second direction is the thickness direction of the battery cell 10, the first heat exchange portions 3142 extend in the length direction of the battery cell 10 and are arranged at intervals in the thickness direction of the battery cell 10. In this way, the plurality of first heat exchange portions 3142 may be bendingly connected to form an S shape, which can achieve heat exchange for the plurality of battery cells 10.

In the above embodiment, by arranging the first heat exchange portions 3142 to extend linearly in the second direction, the production difficulty of the first heat exchange portion 3142 may be reduced, thereby reducing the production complexity of the first tube segment 3141. At the same time, the straight tube can further increase a flow velocity of the heat exchange fluid, thereby improving the heat exchange effect of the first tube segment 3141.

Referring to FIG. 9 to FIG. 12 again, the first tube segment 3141 further includes a first bent portion 3143, and the first bent portion 3143 is arc-shaped and is bendingly connected between two adjacent first heat exchange portions 3142.

The first bent portion 3143 is arc-shaped, that is, the first bent portion 3143 extends along an arc. Flow directions of the heat exchange fluid at both ends of the first bent portion 3143 have a certain angle. Thus, the first bent portion 3143 may change the flow direction of the heat exchange fluid, thereby allowing the two connected first heat exchange portions 3142 to extend and be arranged within a preset region. This increases the heat exchange area of the first tube segment 3141 and improves the heat exchange efficiency of the first tube segment 3141. Meanwhile, the first bent portion 3143 is arc-shaped. The arc-shaped bent structure can reduce flow resistance of the fluid and reduce pressure drop, thereby increasing a flow rate of the fluid and further increasing the heat exchange efficiency of the first tube segment 3141.

Further, the quantity of the first bent portions 3143 may be one, two, three, or more. The first bent portion 3143 allows a detour arrangement of the first tube segment 3141, thereby increasing the heat exchange area of the first tube segment 3141 and improving the heat exchange efficiency of the first tube segment 3141.

In the above technical solution, by arranging the first bent portion 3143, a direction of fluid flow inside the first tube segment 3141 can be changed, and a smooth transition connection between the two first heat exchange portions 3142 can be achieved, thereby realizing the detour arrangement of the first tube segment 3141. As a result, a contact area between a single battery cell 10 and the first tube segment 3141 can be increased, thereby increasing the heat exchange area and improving heat exchange efficiency of the first tube segment 3141.

Meanwhile, the first bent portion 3143 is arc-shaped, which can reduce flow resistance of the fluid and reduce pressure drop, thereby increasing a flow rate of the fluid and further increasing the heat exchange efficiency of the first tube segment 3141. In addition, the arrangement of the first bent portion 3143 makes the structure of the first tube segment 3141 more compact and occupies less overall space, which is more conducive to realizing miniaturization of the battery 100 and improves a volumetric energy density of the battery 100.

In some specific examples of the present application, referring to FIG. 9 to FIG. 12, the first bent portion 3143 may be semi-circular.

In other words, the first bent portion 3143 may extend along a semi-circular arc. Specifically, the first bent portion 3143 may extend along a semi-circular arc that protrudes in a direction facing away from the two first heat exchange portions 3142 connected to the first bent portion 3143. An angle between an inlet and an outlet of the first bent portion 3143 is 180°, and flow directions at positions of the outlet and the inlet of the first bent portion 3143 are opposite. In this way, the two adjacent first heat exchange portions 3142 are closer together, and the structure of the entire first tube segment 3141 is more compact and reliable. The first bent portion 3143 is configured to connect two first heat exchange portions 3142 that are arranged parallel to each other and spaced apart. In other embodiments, the bending degree of the first bent portion 3143 may be adjusted as needed, for example, it may be 150°, 135°, and the like, which is not limited in the embodiments of the present application.

Two first heat exchange portions 3142 are formed into a "U"-shaped pipe through the first bent portion 3143. The first tube segment 3141 may contain one or a plurality of "U"-shaped pipes. The plurality of "U"-shaped pipes are connected in sequence, and the connected "U"-shaped pipes are connected through the first bent portion 3143.

In the above technical solution, by arranging the first bent portion 3143 to be semi-circular arc shaped, the design diversity of the heat exchange tube 314 may be increased, thereby improving the adaptability of the heat exchange tube 314. At the same time, the semi-circular arc structure is relatively simple, thereby reducing the production difficulty of the heat exchange tube 314 and increasing the production speed of the heat exchange tube 314.

Referring to FIG. 9 again, the first heat exchange portion 3142 extends in the second direction, and the second tube segment 3144 is arranged on the same side of a plurality of first tube segments 3141 and extends in the first direction.

Specifically, the second tube segment 3144 may extend in the first direction. One end of the second tube segment 3144 is in communication with one end of the first tube segment 3141, and the other end of the second tube segment 3144 is in communication with the current collector 315. The second tube segment 3144 is connected between the current collector 315 and the first tube segment 3141, so that the heat exchange tube 314 may be connected to the thermal management assembly of the battery 100.

In the above technical solution, the second tube segment 3144 is arranged on the same side of a plurality of first tube segments 3141. On the one hand, the second tube segment 3144 can be used to connect the current collector 315 and the first tube segments 3141 together, thereby realizing circulatory flow of the heat exchange fluid. On the other hand, space between the current collector 315 and the plurality of first tube segments 3141 is effectively utilized, which can improve the space utilization rate while increasing the heat exchange area and improving the heat exchange efficiency.

Referring to FIG. 10 to FIG. 12, the second tube segment 3144 is bent to form a U-shaped region 3144a, and the first tube segment 3141 is bendingly arranged within the U-shaped region 3144a, so that the second tube segment 3144 extends along an outer periphery of the first tube segment 3141.

The statement that "the second tube segment 3144 is bent to form a U-shaped region 3144a, and the first tube segment 3141 is bendingly arranged within the U-shaped region 3144a" is intended to illustrate that the second tube segment 3144 is arranged on the circumferential periphery of the first tube segment 3141, and may be arranged on three circumferential sides of the first tube segment 3141. The second tube segment 3144 may be arranged closer to the periphery of the battery 100 relative to the first tube segment 3141.

The second tube segment 3144 is bent to form the U-shaped region 3144a, that is, in the direction from one end of the second tube segment 3144 to the other end, the second tube segment 3144 extends along a U-shape line to form a U-shaped region 3144a assuming a U shape.

The first tube segment 3141 is bendingly arranged within the U-shaped region 3144a, that is, the first tube segment 3141 is arranged within the space enclosed by the second tube segment 3144, and the first tube segment 3141 extends non-linearly on the inner side of the second tube segment 3144, having at least one bending position.

It should be noted that in this embodiment, it is only limited that the first tube segment 3141 is bendingly arranged within the U-shaped region 3144a, and a bending form of the first tube segment 3141 is not limited. That is, the specific bending form of the first tube segment 3141 may be designed according to the heat exchange requirements of the battery 100. For example, the first tube segment 3141 may extend in the length direction of the battery cell 10 (that is, the X direction in FIG. 12), and after extending to a certain length, bend towards the width direction of the battery cell 10 (that is, the Y direction in FIG. 12), and then continue to extend in the length direction of the battery cell 10 and bend in the width direction. Alternatively, the first tube segment 3141 may extend in the width direction of the battery cell 10, and after extending to a certain length, bend towards the length direction of the battery cell 10, and then continue to extend in the width direction of the battery cell 10 and bend in the length direction.

The first tube segment 3141 and the second tube segment 3144 are bendingly connected. That is, one end of the first tube segment 3141 and one end of the second tube segment 3144 are connected, and a connection position between the first tube segment 3141 and the second tube segment 3144 is a non-linear structure with a bend. For example, the connection position between the first tube segment 3141 and the second tube segment 3144 may be bent into an arc segment.

The first tube segment 3141 and the second tube segment 3144 are connected. In this way, one of the end of the first tube segment 3141 remote from the second tube segment 3144 and the end of the second tube segment 3144 remote from the first tube segment 3141 may be used as a liquid inflow end and the other may be used as a liquid outflow end. Therefore, when the first tube segment 3141 is performing heat exchange, a heat exchange medium may flow from the first tube segment 3141 to the second tube segment 3144, or flow from the second tube segment 3144 to the first tube segment 3141.

It is understandable that as the heat exchange fluid flows in the first tube segment 3141, the temperature of the heat exchange fluid gradually changes, resulting in a gradual decrease in the heat exchange effect. For example, when the first heat exchange member 31 cools the battery cell assembly 101, the heat of the battery cell 10 is gradually transferred to the heat exchange fluid, causing the temperature of the heat exchange fluid to gradually increase as it flows in the first tube segment 3141, and the temperature difference between the heat exchange fluid and the battery cell 10 gradually decreases, resulting in a gradual decrease in the heat exchange efficiency. When the first heat exchange member 31 heats the battery cell assembly 101, the heat in the heat exchange fluid is gradually transferred to the battery cell 10, causing the temperature of the heat exchange fluid to gradually decrease as it flows in the first tube segment 3141, and the temperature difference between the heat exchange fluid and the battery cell 10 gradually decreases, resulting in a gradual decrease in the heat exchange efficiency.

When the first heat exchange member 31 cools the battery cell assembly 101, the heat exchange fluid may also flow from the first tube segment 3141 to the second tube segment 3144, but the heat exchange fluid may also flow from the second tube segment 3144 to the first tube segment 3141. When the heat exchange fluid also flows from the first tube segment 3141 to the second tube segment 3144, the battery cells 10 in the middle of the battery 100 (i.e., the inner battery cells 10 on the outer periphery) may be cooled first, and then the battery cells 10 at the periphery of the battery 100 may be cooled. Since the heat dissipation of the battery cells 10 at the periphery of the battery 100 is better than that of the inner battery cells 10, the lower-temperature heat exchange fluid in the first tube segment 3141 can better meet the heat dissipation requirements of the battery cells 10 in the middle of the battery 100. At the same time, the battery cells 10 at the periphery can directly dissipate heat naturally towards the external environment, and therefore, even when the temperature of the heat exchange fluid in the second tube segment 3144 is slightly higher, the heat dissipation requirements of the peripheral battery cells 10 can still be met. This results in the battery cells 10 at the periphery of the battery 100 and the battery cells 10 in the middle of the battery 100 receiving roughly the same cooling effect. Consequently, the battery cells 10 at the periphery of the battery 100 and the battery cells 10 in the middle of the battery 100 have relatively consistent temperatures after cooling, so that the temperature distribution inside the battery 100 is more uniform.

When the first heat exchange member 31 heats the battery cell assembly 101, the heat exchange fluid may also flow from the first tube segment 3141 to the second tube segment 3144, but the heat exchange fluid may also flow from the second tube segment 3144 to the first tube segment 3141. For example, when the heat exchange fluid also flows from the second tube segment 3144 to the first tube segment 3141, the battery cells 10 at the periphery of the battery cell assembly 101 can be heated first, and then the heat exchange fluid cools the battery cells 10 in the middle position of the battery cell assembly 101. The battery cells 10 at the periphery of the battery 100 dissipate more heat to the external environment, and the temperature of the battery cells 10 at the periphery of the battery 100 is more easily dropped; therefore, the heat exchange fluid first heats the battery cells 10 at the periphery of the battery 100. The higher-temperature heat exchange fluid can compensate for the heat lost to the external environment from the battery cells 10 due to the heat dissipation, while increasing the temperature of the battery cells 10 at the periphery, thereby meeting their heating requirements. The battery cells 10 in the middle positions of the battery cell assembly 101 have smaller areas in contact with the external environment and have less heat loss. The lower-temperature heat exchange fluid flowing in the first tube segment 3141, in cooperation with the heat generated by the battery cells 10 themselves, can better meet their heating requirements. This results in the battery cells 10 at the periphery of the battery 100 and the battery cells 10 in the middle positions of the battery cell assembly 101 receiving roughly the same heating effect. Consequently, the battery cells 10 at the periphery of the battery 100 and the battery cells 10 in the middle positions of the battery cell assembly 101 have relatively consistent temperatures after heating, so that the temperature distribution inside the battery 100 is more uniform.

In the above embodiment, by bending the second tube segment 3144 to form the U-shaped region 3144a, and bending the first tube segment 3141 to be arranged in the U-shaped region 3144a, when the first heat exchange member 31 exchanges heat with the battery cell assembly 101, the U-shaped region 3144a formed by the outer second tube segment 3144 can be aligned with outer battery cells 10 of the battery 100, and the first tube segment 3141 within the U-shaped region 3144a can be aligned with inner battery cells 10. This allows the first heat exchange member 31 to compensate for a temperature difference between the inner and outer battery cells caused by heat exchange between the outer battery cells 10 and the environment, so that the heat exchange effects of the outer battery cells 10 of the battery cell assembly 101 and the inner battery cells 10 of the battery cell assembly 101 are more consistent, thereby improving the temperature uniformity of the battery 100, and thus improving the service life of the battery 100 to a certain extent.

Referring to FIG. 9 to FIG. 12, the heat exchange tube 314 further includes a third tube segment 3149, the first tube segment 3141 is connected between the third tube segment 3149 and the second tube segment 3144, one end of the third tube segment 3149 is connected to the other end of the first tube segment 3141, and the other end of the third tube segment 3149 is connected to the current collector 315.

The first insulating member 71 includes a third insulating portion, the third insulating portion being at least partially arranged between a side of the third tube segment 3149 facing away from the bottom wall 211 of the box body 21 and the battery cell assembly 101.

In the above technical solution, the heat exchange tube 314 is configured to include the first tube segment 3141, the second tube segment 3144, and the third tube segment 3149. On the one hand, the heat exchange tube 314 can be connected to the thermal management assembly of the battery 100, and on the other hand, this allows the heat exchange tube 314 to form a bent structure, thereby increasing a contact area between the heat exchange tube 314 and the battery cell assembly 101, improving the heat exchange efficiency of the heat exchange tube 314, making a temperature of the battery cell assembly 101 more uniform, and further improving the reliability of the battery 100.

Furthermore, by arranging the third insulating portion on the third tube segment 3149, insulation can be achieved between the third tube segment 3149 and the battery cell assembly 101, and between the third tube segment 3149 and the battery cell assembly 101, thereby reducing corrosion problems caused by direct contact between the heat exchange tube 314 and the battery cell assembly 101, and further improving.

For example, the third insulating portion wraps around an outer peripheral wall of the third tube segment 3149. By wrapping around the outer peripheral wall of the third tube segment 3149 with the third insulating portion, insulation can be achieved between the third tube segment 3149 and the battery cell assembly 101, and between the third tube segment 3149 and the bottom wall 211 of the box body 21, thereby reducing corrosion problems caused by direct contact between the third tube segment 3149 and the battery cell assembly 101 and between the third tube segment and the bottom wall 211 of the box body 21. On the other hand, there is no need to consider an arrangement area and a specific arrangement position of the third insulating portion, which can reduce the difficulty of arranging the third insulating portion and thus improve production efficiency.

According to some embodiments of the present application, the heat exchange tube 314 may be formed by bending a single tube.

Forming by bending a single tube means that the heat exchange tube 314 may be formed by bending a single straight tube multiple times through processing processes such as pressing and rolling. For example, a single straight pipe may be bent at a plurality of preset positions to form a V-shape, U-shape, or the like at the bending positions. The bending shape of the single pipe may be designed according to the actual situation.

In the above embodiments, by configuring the heat exchange tube 314 to be formed by bending a single tube, the quantity of weld points of the first heat exchange member 31 may be reduced, thereby reducing the risk of leakage of the first heat exchange member 31 and improving the reliability of the first heat exchange member 31. At the same time, the operation process of bending a single tube is simpler than a manufacturing process of a plate structure, thereby significantly reducing the cost of the first heat exchange member 31.

According to some embodiments of the present application, the heat exchange tube 314 may be bent in an arc shape at a bending position.

The arc-shaped bend can reduce a flow resistance of the fluid and reduce the pressure drop. Furthermore, the arc-shaped bend of the heat exchange tube 314 at the bending position can increase the flow rate of the heat exchange fluid in the heat exchange flow channel, thereby increasing the heat exchange efficiency of the first heat exchange member 31.

In the above embodiments, by bending the heat exchange tube 314 in an arc shape at the bending position, the flow resistance of the fluid can be reduced and the pressure drop is reduced. Furthermore, the flow rate of the heat exchange fluid in the heat exchange flow channel can be increased, thereby increasing the heat exchange efficiency of the first heat exchange member 31.

Referring to FIG. 9 again, there is one heat exchange tube 314.

In this embodiment, there is one heat exchange tube 314. The heat exchange tube 314 includes a first tube segment 3141, a second tube segment 3144, and a third tube segment 3149. The first tube segment 3141 includes a plurality of first heat exchange portions 3142 and a plurality of first bent portions 3143. The plurality of first heat exchange portions 3142 are arranged in the first direction, and each of the first heat exchange portions 3142 extends in the second direction. The plurality of first heat exchange portions 3142 are connected end to end in sequence through the plurality of first bent portions 3143. The second tube segment 3144 and the third tube segment 3149 are arranged on the same side of the plurality of first tube segments 3141. Both the second tube segment 3144 and the third tube segment 3149 extend in the first direction. One end of the second tube segment 3144 is bendingly connected to one end of the first tube segment 3141, and the other end is connected to the current collector 315. One end of the third tube segment 3149 is bendingly connected to the other end of the first tube segment 3141, and the other end is connected to the current collector 315.

Referring to FIG. 10 and FIG. 11 again, there are a plurality of heat exchange tubes 314, and the plurality of heat exchange tubes 314 are arranged around each other.

As shown in FIG. 10, in this embodiment, the first heat exchange member 31 includes three heat exchange tubes 314. Each of the heat exchange tubes 314 has a first inlet/outlet 3108 at one end and a second inlet/outlet 3109 at the other end. The first inlet/outlet 3108 of each of the three heat exchange tubes 314 is connected to one of the current collectors 315, and the second inlet/outlet 3109 of each of the three heat exchange tubes 314 is connected to another current collector 315.

Each of the heat exchange tubes 314 includes a first tube segment 3141, a second tube segment 3144, and a third tube segment 3149. Both ends of the first tube segment 3141 are connected to one end of the second tube segment 3144 and one end of the third tube segment 3149 respectively; the other end of the second tube segment 3144 is connected to one of the current collectors 315, and the other end of the third tube segment 3149 is connected to another current collector 315.

The first tube segment 3141 of each of the heat exchange tubes 314 includes a plurality of first heat exchange portions 3142 and a plurality of first bent portions 3143. The plurality of first heat exchange portions 3142 are arranged in the first direction, and the length direction of each of the first heat exchange portions 3142 extends in the second direction. The plurality of first heat exchange portions 3142 are bendingly connected end to end in sequence through the plurality of first bent portions 3143, thereby enabling the first tube segment 3141 to form a multi-bent structure.

The second tube segment 3144 of one of the heat exchange tubes 314 is formed into a U-shaped structure, which allows it to be arranged on the outer periphery of the first tube segment 3141 of the heat exchange tube 314 and other two heat exchange tubes 314. The second tube segment 3144 of the heat exchange tube 314 includes a second heat exchange portion 3145, a third heat exchange portion 3147, and a fourth heat exchange portion 3148. The second heat exchange portion 3145 and the fourth heat exchange portion 3148 are arranged on opposite sides of the first tube segment 3141, and length directions of the second heat exchange portion 3145 and the fourth heat exchange portion 3148 both extend in the second direction, while a length direction of the third heat exchange portion 3147 extends in the first direction. One end of the third heat exchange portion 3147 and one end of the second heat exchange portion 3145 are bendingly connected by a second bent portion 3146. The other end of the third heat exchange portion 3147 and one end of the fourth heat exchange portion 3148 are bendingly connected by a second bent portion 3146. The other end of the second heat exchange portion 3145 is in communication with the first tube segment 3141 by the second bent portion 3146. The other end of the fourth heat exchange portion 3148 is connected to one of the current collectors 315.

The second tube segments 3144 of the other two heat exchange tubes 314 are also each formed into a U-shaped structure, so that it may be arranged on the outer periphery of the first tube segment 3141 of the corresponding heat exchange tube 314.

In the above technical solution, by arranging the second heat exchange portion 3145, the third heat exchange portion 3147, and the fourth heat exchange portion 3148 on three sides of the first tube segment 3141 respectively, the second tube segment 3144 can surround the first tube segment 3141, thereby increasing compactness of the arrangement of the first tube segment 3141, and realizing miniaturization of the structure of the first tube segment 3141, which is conducive to ensuring volumetric energy density of the battery 100. At the same time, the structure of the first tube segment 3141 can further be simplified, thus facilitates the processing and production of the first heat exchange member 31.

As shown in FIG. 11, in this embodiment, there are two heat exchange tubes 314. Each of the heat exchange tubes 314 has a first inlet/outlet 3108 at one end and a second inlet/outlet 3109 at the other end. The first inlet/outlet 3108 of each of the two heat exchange tubes 314 is connected to one of the current collectors 315, and the second inlet/outlet 3109 of each of the two heat exchange tubes 314 is connected to another current collector 315.

Each of the heat exchange tubes 314 includes a first tube segment 3141, a second tube segment 3144, and a third tube segment 3149. Both ends of the first tube segment 3141 are connected to one end of the second tube segment 3144 and one end of the third tube segment 3149 respectively; the other end of the second tube segment 3144 is connected to one of the current collectors 315, and the other end of the third tube segment 3149 is connected to another current collector 315.

The first tube segment 3141 of each of the heat exchange tubes 314 includes a plurality of first heat exchange portions 3142 and a plurality of first bent portions 3143. The plurality of first heat exchange portions 3142 are arranged in the first direction, and the length direction of each of the first heat exchange portions 3142 extends in the second direction. The plurality of first heat exchange portions 3142 are bendingly connected in sequence through the plurality of first bent portions 3143, thereby enabling the first tube segment 3141 to form a multi-bent structure.

The second tube segment 3144 of one of the heat exchange tubes 314 is formed into a U-shaped structure, which allows it to be arranged on the outer periphery of the first tube segment 3141 of the heat exchange tube 314 and the other heat exchange tubes 314. The second tube segment 3144 of the heat exchange tube 314 includes a second heat exchange portion 3145, a third heat exchange portion 3147, and a fourth heat exchange portion 3148. The second heat exchange portion 3145 and the fourth heat exchange portion 3148 are arranged on opposite sides of the first tube segment 3141, and length directions of the second heat exchange portion 3145 and the fourth heat exchange portion 3148 both extend in the second direction, while a length direction of the third heat exchange portion 3147 extends in the first direction. One end of the third heat exchange portion 3147 and one end of the second heat exchange portion 3145 are bendingly connected by a second bent portion 3146. The other end of the third heat exchange portion 3147 and one end of the fourth heat exchange portion 3148 are bendingly connected by a second bent portion 3146. The other end of the second heat exchange portion 3145 is in communication with the first tube segment 3141 by the second bent portion 3146. The other end of the fourth heat exchange portion 3148 is connected to one of the current collectors 315.

The second tube segments 3144 of the other heat exchange tubes 314 are also each formed into a U-shaped structure, so that it may be arranged on the outer periphery of the first tube segment 3141 of the heat exchange tube 314.

In the above technical solution, by arranging the second heat exchange portion 3145, the third heat exchange portion 3147, and the fourth heat exchange portion 3148 on three sides of the first tube segment 3141 respectively, the second tube segment 3144 can surround the first tube segment 3141, thereby increasing compactness of the arrangement of the first tube segment 3141, and realizing miniaturization of the structure of the first tube segment 3141, which is conducive to ensuring volumetric energy density of the battery 100. At the same time, the structure of the first tube segment 3141 can further be simplified, thus facilitates the processing and production of the first heat exchange member 31.

Referring to FIG. 12 again, there are a plurality of heat exchange tubes 314, and the plurality of heat exchange tubes 314 are arranged at intervals in the first direction. The plurality of heat exchange tubes 314 may be connected in parallel, so that the heat exchange fluid can simultaneously exchange heat with different battery units 102 along the plurality of heat exchange tubes 314, thereby improving the heat exchange efficiency of the battery cell assembly 101 and making the heat exchange effect of the battery cell assembly 101 better to a certain extent.

As shown in FIG. 12, in this embodiment, there are two heat exchange tubes 314. The two heat exchange tubes 314 are arranged symmetrically about a central line extending in the second direction of the box body 21. One end of each of the heat exchange tubes 314 has a first inlet/outlet 3108 at one end and a second inlet/outlet 3109 at the other end. The first inlet/outlet 3108 and the second inlet/outlet 3109 of each of the two heat exchange tubes 314 are both connected to the same current collector 315.

Each of the heat exchange tubes 314 includes a first tube segment 3141, a second tube segment 3144, and a third tube segment 3149. The first tube segment 3141 of each of the heat exchange tubes 314 includes a plurality of first heat exchange portions 3142 and a plurality of first bent portions 3143. The plurality of first heat exchange portions 3142 are arranged in the first direction, and the length direction of each of the first heat exchange portions 3142 extends in the second direction. The plurality of first heat exchange portions 3142 are bendingly connected in sequence through the plurality of first bent portions 3143, thereby enabling the first tube segment 3141 to form a multi-bent structure.

The second tube segment 3144 of each of the heat exchange tubes 314 is arranged on the outer periphery of the first tube segment 3141 and includes a second heat exchange portion 3145, a third heat exchange portion 3147, and a fourth heat exchange portion 3148. The second heat exchange portion 3145 and the fourth heat exchange portion 3148 are arranged on opposite sides of the first tube segment 3141, and a length direction of the third heat exchange portion 3147 extends in the second direction, while length directions of the second heat exchange portion 3145 and the fourth heat exchange portion 3148 both extend in the first direction. One end of the third heat exchange portion 3147 and one end of the second heat exchange portion 3145 are bendingly connected by a second bent portion 3146. The other end of the third heat exchange portion 3147 and one end of the fourth heat exchange portion 3148 are bendingly connected by a second bent portion 3146. The other end of the second heat exchange portion 3145 is in communication with the first tube segment 3141 by the second bent portion 3146. The other end of the fourth heat exchange portion 3148 is connected to one of the current collectors 315.

In the above technical solution, arranging the plurality of heat exchange tubes 314 at intervals in the first direction or around each other can improve the overall integrity of the plurality of heat exchange tubes 314 in the first heat exchange member 31, increase diversity of the heat exchange tubes 314, and enable the first heat exchange member 31 to better adapt to needs of battery cell assemblies 101 with different arrangement forms. The overall structure of the first heat exchange member 31 can be arranged more flexibly and compactly, so that the first heat exchange member 31 can better meet the heat exchange area requirements of battery cells 10 at different positions in the battery cell assembly 101.

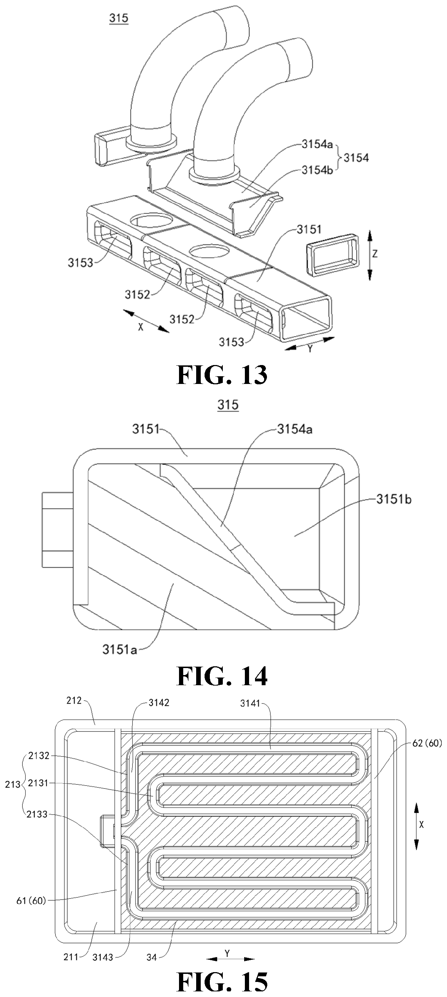

Referring to FIG. 12 again, and further referring to FIG. 13 and FIG. 14, FIG. 13 is a schematic structural diagram of a current collector 315 of a battery 100 according to some embodiments of the present application; and FIG. 14 is a sectional structural diagram of the current collector 315 shown in FIG. 13. The current collector 315 includes a tube body 3151, a first flow channel interface 3152, and a second flow channel interface 3153. The first flow channel interface 3152 is connected to the first inlet/outlet 3108 of the heat exchange tube 314, and the second flow channel interface 3153 is connected to the second inlet/outlet 3109 of the heat exchange tube 314.

The current collector 315 further includes a partition structure 3154, and the partition structure 3154 is arranged inside the tube body 3151. The partition structure 3154 separates the first flow channel interface 3152 and the second flow channel interface 3153 inside the tube body 3151.

Specifically, the tube body 3151 may be configured for the collection and distribution of the heat exchange fluid. The first flow channel interface 3152 and the second flow channel interface 3153 are provided on the tube body 3151, and the first flow channel interface 3152 and the second flow channel interface 3153 are respectively connected to the inlet/outlet of the heat exchange tube 314, and are configured to input and output the heat exchange fluid into and out of the current collection tube.

The partition structure 3154 is arranged inside the tube body 3151 and separates the first flow channel interface 3152 and the second flow channel interface 3153 inside the tube body 3151. That is, the first flow channel interface 3152 and the second flow channel interface 3153 are not in communication inside the tube body 3151. Thus, the first flow channel interface 3152 and the second flow channel interface 3153 may be the input end and the output end of the heat exchange tube 314, respectively. This allows the tube body 3151 and the heat exchange tube 314 to form a complete channel, so that the heat exchange fluid may enter the heat exchange tube 314 from the tube body 3151 for heat exchange and then exit from the tube body 3151 to complete the heat exchange work. Therefore, the liquid inflow and outflow operations can be completed using a single tube body 3151, thereby reducing the quantity of current collection tubes used and thus reducing the production cost and space occupied by the thermal management assembly of the battery 100.

In the above technical solution, by arranging the tube body 3151, the first inlet/outlet 3108 and the second inlet/outlet 3109 of the heat exchange tube 314 are integrated. By arranging the partition structure 3154 inside the tube body 3151, the first flow channel interface 3152 and the second flow channel interface 3153 are separated, so that the interior of the tube body 3151 may be partitioned, and the liquid inflow and outflow processes do not affect each other.

Referring to FIG. 12 and FIG. 13, there are a plurality of heat exchange tubes 314, a plurality of first flow channel interfaces 3152, and a plurality of second flow channel interfaces 3153. For example, the quantities of the first flow channel interfaces 3152 and the second flow channel interfaces 3153 may be two, three, or more. The plurality of first flow channel interfaces 3152 correspond one-to-one with and are connected to the first inlets/outlets 3108 of the plurality of heat exchange tubes 314, and the plurality of second flow channel interfaces 3153 correspond one-to-one with and are connected to the second inlets/outlets 3109 of the plurality of heat exchange tubes 314.

In the above technical solution, by arranging the plurality of first flow channel interfaces 3152 and the plurality of second flow channel interfaces 3153, the current collector 315 can be used to converge the plurality of first inlets/outlets 3108 of the plurality of heat exchange tubes 314 together, and converge the plurality of second inlets/outlets 3109 of the plurality of heat exchange tubes 314 together. On the one hand, the temperature of the heat exchange fluid in the plurality of heat exchange tubes 314 can be more balanced, thereby improving the heat exchange efficiency of the first heat exchange member 31 and improving the reliability of the battery 100. On the other hand, it can facilitate the mounting of the first heat exchange member 31.

The plurality of first flow channel interfaces 3152 are in communication inside the tube body 3151; and/or the plurality of second flow channel interfaces 3153 are in communication inside the tube body 3151. The current collector 315 can be used to converge the plurality of first inlets/outlets 3108 of the plurality of heat exchange tubes 314 together, and converge the plurality of second inlets/outlets 3109 of the plurality of heat exchange tubes 314 together, so that the temperature of the heat exchange fluid in the plurality of heat exchange tubes 314 can be more balanced.

Specifically, the plurality of second flow channel interfaces 3153 are in communication inside the tube body 3151, and in the extension direction of the tube body 3151, at least two second flow channel interfaces 3153 are located on both sides of the first flow channel interface 3152, that is, at least two second flow channel interfaces 3153 are arranged at both ends of the tube body 3151, and the plurality of first flow channel interfaces 3152 are arranged between the at least two second flow channel interfaces 3153.

In this way, the heat exchange fluid can flow out of the tube body 3151 from the second flow channel interfaces 3153 on both sides, and after heat exchange, it can flow back to the tube body 3151 from the first flow channel interfaces 3152 in the middle. Alternatively, the heat exchange fluid can flow out of the tube body 3151 from the first flow channel interfaces 3152 in a middle region of the tube body 3151, and after heat exchange, it can flow back to the tube body 3151 from the second flow channel interfaces 3153 at both ends of the tube body 3151. In this way, the heat exchange fluid can flow from the periphery of the battery 100 to the central region to achieve heat exchange, or the heat exchange fluid can flow from the central region of the battery 100 to the periphery to achieve heat exchange, thereby improving the temperature uniformity of the battery 100. This can reduce assembling steps and mounting space of the thermal management assembly, improve the temperature uniformity of the battery 100, and extend the service life of the battery 100.

In the above technical solution, by arranging the current collector 315 and using the partition structure 3154 to separate the plurality of first flow channel interfaces 3152 and the plurality of second flow channel interfaces 3153, with the plurality of second flow channel interfaces 3153 being in communication in the tube body 3151, the first flow channel interfaces 3152 and the second flow channel interfaces 3153 can respectively form the input ends and output ends of the heat exchange tube 314. This allows for the completion of liquid inflow and outflow operations using a single tube body 3151, reducing the quantity of current collecting tubes used and also reducing the need for external connecting pipes. This reduces the production cost and space occupied by the heat exchange tube 314 management assembly, and reduces the assembly steps and mounting space of the thermal management assembly. In addition, there are a plurality of second flow channel interfaces 3153, and at least two of the second flow channel interfaces 3153 are located on both sides of the first flow channel interface 3152. This allows the heat exchange fluid to flow from the periphery of the battery 100 to the central region to achieve heat exchange, or allows the heat exchange fluid to flow from the central region of the battery 100 to the periphery to achieve heat exchange. This can improve the temperature uniformity of the battery 100 and extend the service life of the battery 100.

Referring to FIG. 13 and FIG. 14, the tube body 3151 may be divided by a partition structure 3154 into a first space 3151a and a second space 3151b that are independent of each other. The first space 3151a is in communication with the first flow channel interface 3152, and the second space 3151b is in communication with the second flow channel interface 3153. In the extension direction of the tube body 3151, the second space 3151b includes a first segment, a second segment, and a third segment that are in communication in sequence. The first segment and the third segment are located on both sides of the first space 3151a, and the second segment is arranged side by side with the first space 3151a.

Specifically, the first space 3151a and the second space 3151b may be independent of each other and not in communication with each other, forming two independent flow channels. The second space 3151b includes a first segment, a second segment, and a third segment that are in communication in sequence. A second flow channel interface 3153 is arranged at positions of the first segment and the third segment. The second space 3151b allows a plurality of second flow channel interfaces 3153 to be in communication. The first space 3151a is arranged side by side with the second segment, and the first space 3151a is in communication with the first flow channel interface 3152. Thus, the first flow channel interface 3152 is located in a middle position of the plurality of second flow channel interfaces 3153.

For example, as shown in FIG. 13 and FIG. 14, there are two first flow channel interfaces 3152 and two second flow channel interfaces 3153. The two second flow channel interfaces 3153 are located on both sides of the two first flow channel interfaces 3152. In the length direction of the tube body 3151, the second space 3151b is C-shaped. The first space 3151a is arranged parallel to the second segment and is located between the first segment and the third segment.

In the above technical solution, by arranging the first space 3151a and the second space 3151b to be independent of each other and not in communication, two independent flow channels may be formed inside the tube body 3151, so that inflow and outflow of the heat exchange fluid do not interfere with each other. At the same time, the first space 3151a and the second space 3151b are arranged side by side, which can reduce the size of the tube body 3151, thereby reducing the space ratio of the current collecting tube.

Furthermore, as shown in FIG. 13 and FIG. 14, the partition structure 3154 may include a first partition plate 3154a and a second partition plate 3154b. The first partition plate 3154a is configured to separate the second segment and the first space 3151a. There are at least two second partition plates 3154b, which are located at both ends of the first partition plate 3154a in the extension direction of the tube body 3151. The second partition plate 3154b is configured to separate the first segment and the first space 3151a, as well as the third segment and the first space 3151a.

Specifically, the first partition plate 3154a may be formed into a plate of a certain size. The size of the first partition plate 3154a may be set according to the position size of the tube body 3151 and the first flow channel interface 3152. The first partition plate 3154a extends in the length direction of the tube body 3151 (for example, the X direction shown in FIG. 13). The two ends of the first partition plate 3154a in the width direction are sealed to an inner wall surface of the tube body 3151, and in the width direction of the tube body 3151 (for example, the Y direction shown in FIG. 13), it is used to separate the second segment and the first space 3151a, so that the second segment and the first space 3151a are arranged side by side in the width direction of the tube body 3151.

There are at least two second partition plates 3154b, that is, there may be two, three, or more second partition plates 3154b. When there are only two second partition plates 3154b, the second partition plates 3154b are located at both ends of the length direction of the first partition plate 3154a and are sealed to the first partition plate 3154a and the inner wall surface of the tube body 3151, so that the first space 3151a and the second space 3151b can be completely independent and not in communication with each other.

In the above technical solution, by arranging the first partition plate 3154a and the second partition plate 3154b, two independent spaces can be formed inside the tube body 3151, so that the inflow and outflow of liquid do not interfere with each other, thereby improving the heat exchange effect of the battery 100.

Referring to FIG. 11 again, there are a plurality of heat exchange tubes 314 and two current collectors 315. One of the current collectors 315 has a plurality of liquid inflow interfaces 3155, and the plurality of liquid inflow interfaces 3155 correspond one-to-one with and are connected to the first inlets/outlets 3108 of the plurality of heat exchange tubes 314. The other current collector 315 has a plurality of liquid outflow interfaces 3156, and the plurality of liquid outflow interfaces 3156 correspond one-to-one with and are connected to the second inlets/outlets 3109 of the plurality of heat exchange tubes 314.

The heat exchange fluid entering from one of the current collectors 315 can flow into the corresponding heat exchange tubes 314 from the first inlets/outlets 3108 of the plurality of heat exchange tubes 314 respectively, and finally flow into the other current collector 315 from the second inlets/outlets 3109 of the plurality of heat exchange tubes 314.

In the above technical solution, by arranging two current collectors 315, with one of the current collectors 315 configured for liquid inflow and the other one of the current collectors 315 configured for liquid outflow, the structure of the current collectors 315 can be simplified and the inflow and outflow of the heat exchange fluid can be conveniently controlled.

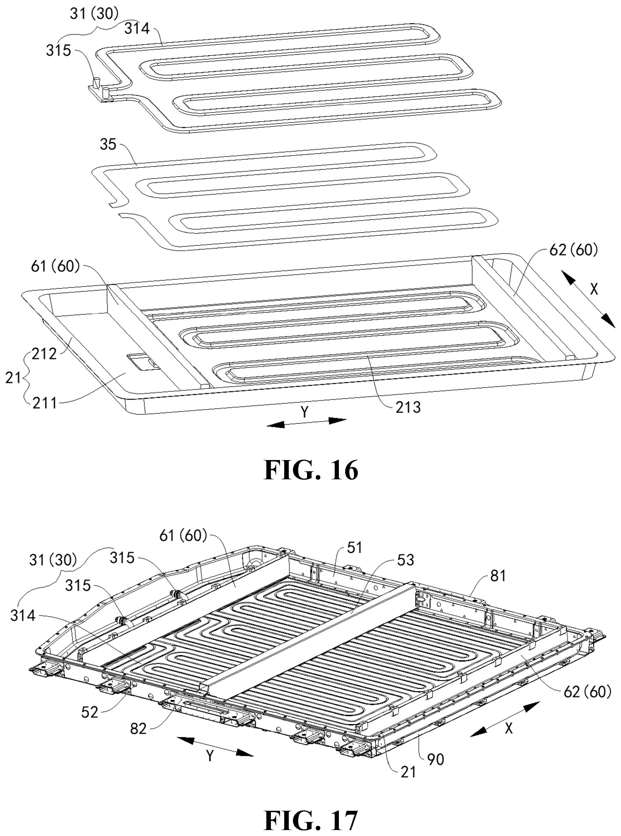

Referring to FIG. 15 and FIG. 16, FIG. 15 is a schematic structural diagram of the battery 100 shown in FIG. 3 with a battery cell assembly 101 removed; and FIG. 16 is an exploded diagram of the structure shown in FIG. 15. The bottom wall 211 of the box body 21 has an accommodating groove 213, the first heat exchange member 31 is at least partially arranged in the accommodating groove 213, and the first bonding layer 34 at least partially fills the accommodating groove 213.

In the above technical solution, providing the accommodating groove 213 can, on the one hand, position the heat exchange tube 314, reduce the risk of shaking of the heat exchange tube 314, and improve mounting stability and reliability of the heat exchange tube 314, thereby improving the reliability of the battery 100. On the other hand, it can increase a connection area between the heat exchange tube 314 and the bottom wall 211 of the box body 21, thereby improving the reliability of the heat exchange tube 314 being fixed on the box body 21. In addition, the battery cell assembly 101 can be in contact with the bottom wall 211 of the box body 21 and the heat exchange tube 314, the heat exchange efficiency can thus be improved, thereby further enhancing the reliability of the battery 100.

In addition, the accommodating groove 213 is provided on the bottom wall 211 of the box body 21, so that the bottom wall 211 of the box body 21 has a concave-convex structure, which can improve structural strength of the box body 21. The heat exchange tube 314 is arranged in the accommodating groove 213, which is equivalent to a reinforcing structure of the box body 21, thereby being capable of further improving the structural strength of the box body 21.

Referring to FIG. 15 again, an inner surface of the bottom wall 211 of the box body 21 has a mounting region 201, and the mounting region 201 is configured to place the battery cell assembly 101. The battery 100 further includes: a second insulating member 72, at least partially arranged in the mounting region 201 excluding the accommodating groove 213, such that the second insulating member 72 is arranged between the bottom wall 211 of the box body 21 and the battery cell assembly 101, and the first bonding layer 34 is arranged in the mounting region 201 to cover the second insulating member 72.

Specifically, the second insulating member 72 can separate the bottom wall 211 of the box body 21 from the battery cell assembly 101, while the first bonding layer 34 covers the second insulating member 72, so that the second insulating member 72 is connected to the battery cell assembly 101. The second insulating member 72 can be formed on an inner side of the box body 21 by spraying, electrophoresis, or dip coating, bonded to the inner side of the box body 21, or hot-pressed onto the inner side of the box body 21.

In the above technical solution, arranging the second insulating member 72 in the mounting region 201 excluding the accommodating groove 213 can achieve insulation between the bottom wall 211 of the box body 21 and the battery cell assembly 101, reduce the corrosion problems caused by direct contact between the bottom wall 211 of the box body 21 and the battery cell assembly 101, and thus improve the reliability of the battery 100.

Furthermore, the first bonding layer 34 covers the second insulating member 72, and therefore, insulation between the bottom wall 211 of the box body 21 and the battery cell assembly 101 is achieved without affecting the arrangement of the first bonding layer 34, thereby improving the reliability of the connection.

Referring to FIG. 15 again, the accommodating groove 213 includes a first groove segment 2131, a second groove segment 2133, and a third groove segment 2134. The shape of the first groove segment 2131 is approximately the same as the shape of the first tube segment 3141, the shape of the second groove segment 2133 is approximately the same as the shape of the second tube segment 3144, and the shape of the third groove segment 2134 is approximately the same as the shape of the third tube segment 3149. The first tube segment 3141 is at least partially located within the first groove segment 2131, the second tube segment 3144 is at least partially located within the second groove segment 2133, and the third tube segment 3149 is at least partially located within the third groove segment 2134.

In the above technical solution, by configuring the accommodating groove 213 to include the first groove segment 2131, the second groove segment 2133, and the third groove segment 2134, the first groove segment 2131 can position the first tube segment 3141, the second groove segment 2133 can position the second tube segment 3144, and the third groove segment 2134 can position the third tube segment 3149, so that the arrangement of the heat exchange tubes 314 is more stable, and the heat exchange efficiency can be further improved, thereby improving the reliability of the battery 100.

Referring to FIG. 17, FIG. 17 is a partially assembly diagram of a battery 100 according to other embodiments of the present application. The box body 21 is provided with an expansion beam 60. The expansion beam 60 includes a first expansion beam 61 and a second expansion beam 62, the first expansion beam 61 and the second expansion beam 62 are arranged opposite to each other, and each of the first expansion beam 61 and the second expansion beam 62 has a cavity.

The mounting region 201 is located between the first expansion beam 61 and the second expansion beam 62, and the battery cell assembly 101 is located between the first expansion beam 61 and the second expansion beam 62.

In the above technical solution, by arranging the first expansion beam 61 and the second expansion beam 62, when the battery cell 10 of the battery cell assembly 101 has an expansion tendency, the first expansion beam 61 and the second expansion beam 62 abut against the battery cell assembly 101, and deformation of the cavities of the first expansion beam 61 and the second expansion beam 62 is utilized to absorb and transmit an expansion force, thereby reducing the probability of the battery cell 10 deforming due to the expansion force.

The expansion beam 60 may be made by an extrusion process. Alternatively, a stamping process may be used to form a plurality of plates, and the plurality of plates are then assembled to form the expansion beam 60.

Referring to FIG. 8 again, a thickness h of the first bonding layer 34 at a position excluding the accommodating groove 213 is 0.5 mm to 2 mm. For example, the thickness h of the first bonding layer 34, excluding the position of the accommodating groove 213, is 0.5 mm, 0.8 mm, 1 mm, 1.5 mm, or 2 mm, so that the first bonding layer 34 can fill a gap between the first heat exchange member 31, the bottom of the battery cell assembly 101, and the bottom wall 211 of the box body 21.

In the above technical solution, by defining the thickness of the first bonding layer 34 at the position excluding the accommodating groove 213 to meet the above condition, the first bonding layer 34 can fully cover the first insulating member 71 and the second insulating member 72, which can improve the connection reliability between the first insulating member 71 and the battery cell assembly 101, and between the second insulating member 72 and the battery cell assembly 101, thereby improving the connection reliability between the bottom wall 211 of the box body 21 and the battery cell assembly 101, and between the first heat exchange member 31 and the battery cell assembly 101, and further improving the reliability of the battery 100.

Referring to FIG. 16 again, a second bonding layer 35 is arranged between a side of the first heat exchange member 31 facing away from the battery cell assembly 101 and the bottom wall 211 of the box body 21.

Specifically, the first heat exchange member 31 may be pre-fixed to the bottom wall 211 of the box body 21, and then the first bonding layer 34 may be arranged so that the first bonding layer 34 can cover the first heat exchange member 31 and the mounting region 201 for arranging the battery cell assembly 101 in the bottom wall 211 of the box body 21. Finally, the battery cell assembly 101 is placed so that the battery cell assembly 101 can be fixed inside the box body 21.

In the above technical solution, by arranging the second bonding layer 35, the first heat exchange member 31 can be pre-fixed in the box body 21, thereby facilitating mounting of the remaining components.

For example, the first bonding layer 34 and the second bonding layer 35 may be thermally conductive adhesives.

The box body 21 is an integrally stamped member. In the above technical solution, since the bottom wall 211 and the enclosure 212 of the box body 21 are integrally stamped, there is no need to consider a sealing problem at a connection between the bottom wall 211 and the enclosure 212, which can improve sealing effect. This can prevent mud and water from seeping into the box body 21 from the connection between the bottom wall 211 and the enclosure 212 and affecting the battery cell assembly 101 inside the box body 21, thereby improving the reliability of the battery 100. Furthermore, the integrally stamped box body 21 does not require splicing, which on the one hand saves a large quantity of bolts on an original profile box body 21, reducing costs, and on the other hand eliminates connection steps, thereby improving the production efficiency.

In addition, the integrally stamped box body 21 can prevent a substance ejected from the battery 100 during thermal runaway and the heat exchange fluid leaking from the first heat exchange assembly 30 from flowing to the outside of the box body 21. This can reduce direct contact between the human body and the leaked substances, protect personal safety, and also reduce environmental pollution.

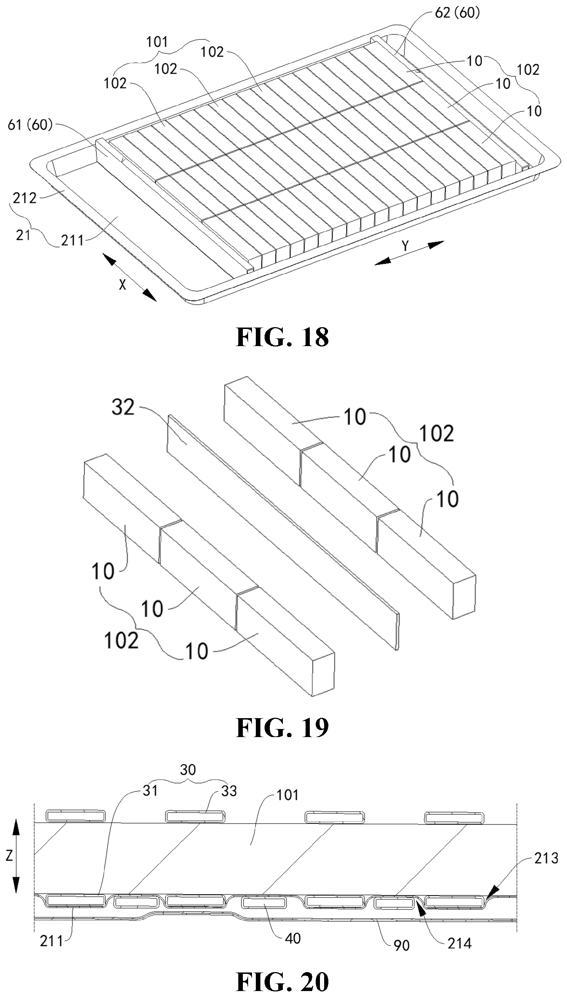

Referring to FIG. 18 and FIG. 19, FIG. 18 is a partially assembly diagram of a battery 100 according to yet other embodiments of the present application; and FIG. 19 is a schematic structural diagram of battery cells 10 and a second heat exchange member 32 shown in FIG. 18. The battery cell assembly 101 includes a plurality of battery units 102, each of the battery units 102 including a plurality of battery cells 10, the plurality of battery cells 10 of each of the battery units 102 being arranged in the first direction, the plurality of battery units 102 being arranged in the second direction, and the first direction and the second direction being arranged to form an angle.

As shown in FIG. 18, for the battery cell assembly 101, an X direction in FIG. 18 is the width direction of the battery cell assembly 101, and a Y direction is the length direction of the battery cell assembly 101. For the battery cell 10, the X direction in FIG. 18 is the length direction of the battery cell 10, and the Y direction is the thickness direction of the battery cell 10. The battery cell assembly 101 includes a plurality of battery units 102, and the plurality of battery units 102 are arranged along a second direction. That is, the plurality of battery units 102 are stacked in the thickness direction of the battery cell 10. Each of the battery units 102 includes a plurality of battery cells 10, and the plurality of battery cells 10 of each of the battery units 102 are arranged in the first direction. That is, the plurality of battery cells 10 of each of the battery units 102 are stacked in the length direction of the battery cell 10.

As shown in FIG. 19, the first heat exchange assembly 30 further includes a second heat exchange member 32, the second heat exchange member 32 being arranged between two adjacent battery units 102. In other words, the second heat exchange member 32 may be arranged in a position where large surfaces of two adjacent battery cells 10 are opposite each other, so that the large surfaces of the two adjacent battery cells 10 can both be in contact with the second heat exchange member 32, thereby improving the heat exchange efficiency of the battery cells 10 and further improving the reliability of the battery 100.

Therefore, in the above technical solution, by arranging the second heat exchange member 32, a contact area between the battery cell 10 and the heat exchange assembly can be increased, thereby increasing the contact area between the battery cell assembly 101 and the first heat exchange assembly 30, which can significantly improve the heat exchange efficiency and improve the reliability of the battery 100.

Referring to FIG. 2, the box body assembly 20 further includes a box cover 22, the box cover 22 is connected above the box body 21, and the box cover 22 has a top wall.

Referring to FIG. 20 again, FIG. 20 is a partially assembly diagram of a battery 100 according to yet other embodiments of the present application. The first heat exchange assembly 30 further includes a third heat exchange member 33, the third heat exchange member 33 being located at least partially between the top wall of the box cover 22 and the battery cell assembly 101.

In the above technical solution, by arranging the third heat exchange member 33, a contact area between the battery cell assembly 101 and the first heat exchange assembly 30 can be increased, which can significantly improve the heat exchange efficiency and improve the reliability of the battery 100.

Referring to FIG. 20 again, the battery 100 further includes a second heat exchange assembly 40, and the second heat exchange assembly 40 is attached externally to the box body assembly 20.

In the above technical solution, by arranging the second heat exchange assembly 40 externally to the box body 21, there is no need to consider problems such as insulation and corrosion prevention of the heat exchange member and the battery cells 10 inside the box body 21. This simplifies the insulation and corrosion prevention design of the second heat exchange assembly 40, reduces the processing difficulty and production cost, solves a short circuit problem between the battery cells 10 and the second heat exchange assembly 40, and improves the reliability of the battery 100. Moreover, by arranging the second heat exchange assembly 40 externally to the box body assembly 20, the second heat exchange assembly 40 does not occupy the space inside the box body 21, so that the capacity of the battery 100 is not reduced due to the mounting of the heat exchange member, thus better improving the capacity of the battery 100.

In the embodiment where the accommodating groove 213 is provided on the inner surface of the bottom wall 211 of the box body 21, the accommodating groove 213 may be integrally formed during the stamping process of the box body 21, or the accommodating groove 213 may be separately processed after the box body 21 is stamped. During the processing of the accommodating groove 213, a mounting groove 214 may be integrally formed on the outer surface of the bottom wall 211 of the box body 21, and the second heat exchange assembly 40 may be placed in the mounting groove 214.

Providing the mounting groove 214 can, on the one hand, position the second heat exchange assembly 40, reduce the risk of shaking of the second heat exchange assembly 40, and improve mounting stability and reliability of the second heat exchange assembly 40, thereby improving the reliability of the battery 100. On the other hand, it can increase a connection area between the second heat exchange assembly 40 and the bottom wall 211 of the box body 21, thereby improving the reliability of the second heat exchange assembly 40 being fixed on the box body 21.

In addition, the battery cell assembly 101 can be in contact with the bottom wall 211 of the box body 21, which increases the connection area between the second heat exchange assembly 40 and the bottom wall 211 of the box body 21, and the heat exchange efficiency can further be improved, thereby further enhancing the reliability of the battery 100.

Referring to FIG. 16 and FIG. 17 again, according to some embodiments of the present application, the battery 100 includes a box body assembly 20, a battery cell assembly 101, a first heat exchange assembly 30, a first expansion beam 61, a second expansion beam 62, a connecting beam 53, a first fixed beam 51, a second fixed beam 52, a first mounting beam 81, a second mounting beam 82, and a bottom guard plate 90.

The box body assembly 20 includes a box body 21 and a box cover 22. The box body 21 is an integrally stamped member having a bottom wall 211 and an enclosure 212.

The first fixed beam 51 and the second fixed beam 52 are arranged opposite each other in the first direction. Length directions of the first fixed beam 51 and the second fixed beam 52 both extend in the second direction and are arranged opposite to two opposite side walls of the enclosure 212 of the box body 21. The first expansion beam 61 and the second expansion beam 62 are arranged opposite each other in the second direction. Length directions of the first expansion beam 61 and the second expansion beam 62 both extend in the first direction. Two ends of the first expansion beam 61 in the length direction are respectively connected to one end of the first fixed beam 51 and one end of the second fixed beam 52. Two ends of the second expansion beam 62 in the length direction are respectively connected to the other end of the first fixed beam 51 and the other end of the second fixed beam 52. At least one of the first expansion beam 61 and the second expansion beam 62 has a support member connected to a side facing away from the battery cell assembly 101. The support member is connected to the bottom wall 211 of the box body 21 or the enclosure 212 of the box body 21. A length direction of the connecting beam 53 extends in the first direction. Two ends of the connecting beam 53 in the length direction are respectively connected to a middle portion of the first fixed beam 51 and a middle portion of the second fixed beam 52.

The first heat exchange assembly 30 includes a first heat exchange member 31, and the first heat exchange member 31 includes a heat exchange tube 314 and a current collector 315.

The heat exchange tube 314 is located inside the box body 21 and between the first expansion beam 61 and the second expansion beam 62. There are a plurality of heat exchange tubes 314, and each of the heat exchange tubes 314 includes a first tube segment 3141, a second tube segment 3144, and a second tube segment 3144. The first tube segment 3141 includes a plurality of first heat exchange portions 3142 and a plurality of first bent portions 3143. The plurality of first heat exchange portions 3142 are arranged in the first direction and each of the first heat exchange portions 3142 extends in the second direction. Adjacent two of the first heat exchange portions 3142 are connected by the first bent portion 3143, so that the plurality of first heat exchange portions 3142 and the plurality of first bent portions 3143 are sequentially connected to form a multi-bend structure. One end of the second tube segment 3144 is connected to one end of the first tube segment 3141, and one end of the third tube segment 3149 is connected to the other end of the first tube segment 3141.

There are two current collectors 315 located on one side of the heat exchange tubes 314. One of the current collectors 315 is connected to one end of the two heat exchange tubes 314, and the other current collector 315 is connected to the other end of the two heat exchange tubes 314. The two current collectors 315 pass through two clearance holes 6302 on the first expansion beam 61, so that the current collectors 315 can be in communication with a water nozzle through a hose.

The battery cell assembly 101 is arranged inside the box body 21 and located above the first heat exchange member 31. The battery cell assembly 101 includes a plurality of battery units 102, and the plurality of battery units 102 are arranged in the second direction. Each of the battery units 102 includes a plurality of battery cells 10, and the plurality of battery cells 10 in each of the battery units 102 are arranged in the first direction. A bottom of each of the battery units 102 is in contact with at least two first heat exchange portions 3142.

The first mounting beam 81 and the second mounting beam 82 are located externally to the box body 21 and on opposite sides of the box body 21. The first mounting beam 81 and the second mounting beam 82 are arranged at intervals in the first direction, and length directions of the first mounting beam 81 and the second mounting beam 82 both extend in the second direction.

The bottom guard plate 90 is located externally to the box body 21 and is arranged opposite to the bottom wall 211 of the box body 21. The opposite sides of the bottom guard plate 90 are connected to the first mounting beam 81 and the second mounting beam 82, respectively.

According to some embodiments of the present application, the present application further provides an electrical apparatus 1000, including the battery 100 according to the above solution, and the battery 100 is configured to provide electrical energy for the electrical apparatus 1000.

The electrical apparatus 1000 may be the above device or system using the battery 100. Since the battery 100 according to the present application has the above-mentioned technical effects, the electrical apparatus 1000 according to the present application also has the above-mentioned technical effects. That is, by using the battery 100, the reliability of the electrical apparatus 1000 can be improved, the production efficiency of the electrical apparatus 1000 can be increased, and the cost can be reduced.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, which should all be covered within the scope of the claims and specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery, comprising:
a box body assembly comprising a box body, the box body having a bottom wall and an enclosure;
a first heat exchange assembly arranged inside the box body and comprising a first heat exchange member, the first heat exchange member being fixed to the bottom wall of the box body;
a battery cell assembly arranged inside the box body assembly, a side of the battery cell assembly facing the bottom wall of the box body being bonded to the bottom wall of the box body and the first heat exchange member by a first bonding layer; and
a first insulating member at least partially arranged between a side of the first heat exchange member facing away from the bottom wall of the box body and the battery cell assembly, the first bonding layer covering the first insulating member.

2. The battery according to claim 1, wherein the first heat exchange member comprises:
a heat exchange tube, the first insulating member being at least partially arranged between a side of the heat exchange tube facing away from the bottom wall of the box body and the battery cell assembly; and
a current collector connected to the heat exchange tube.

3. The battery according to claim 2, wherein the first insulating member wraps around an outer peripheral wall of the heat exchange tube.

4. The battery according to claim 2, wherein the heat exchange tube is a flat tube, and two walls of the flat tube arranged opposite each other in a thickness direction are respectively connected to the battery cell assembly and the bottom wall of the box body assembly.

5. The battery according to claim 2, wherein the heat exchange tube comprises a first tube segment and a second tube segment, one end of the first tube segment is bendingly connected to one end of the second tube segment, and the other end of the second tube segment is connected to the current collector;
wherein the first insulating member comprises a first insulating portion and a second insulating portion, the first insulating portion is arranged between a side of the first tube segment facing away from the bottom wall of the box body and the battery cell assembly, and the second insulating portion is arranged between a side of the second tube segment facing away from the bottom wall of the box body and the battery cell assembly.

6. The battery according to claim 5, wherein the first insulating portion wraps around an outer peripheral wall of the first tube segment.

7. The battery according to claim 5, wherein the second insulating portion wraps around an outer peripheral wall of the second tube segment.

8. The battery according to claim 5, wherein the first tube segment comprises a plurality of first heat exchange portions, and the plurality of first heat exchange portions are arranged at intervals in a first direction and sequentially bendingly connected.

9. The battery according to claim 8, wherein the first tube segment further comprises a first bent portion, and the first bent portion is arc-shaped and is bendingly connected between two adjacent first heat exchange portions.

10. The battery according to claim 8, wherein the first heat exchange portion extends in a second direction, and the second tube segment is arranged on a same side of a plurality of first tube segments and extends in the first direction.

11. The battery according to any one of claims 5 to 9, wherein the second tube segment is bent to form a U-shaped region, and the first tube segment is bendingly arranged in the U-shaped region.

12. The battery according to any one of claims 5 to 11, wherein the heat exchange tube further comprises a third tube segment, and the first tube segment is connected between the third tube segment and the second tube segment;
one end of the third tube segment is connected to the other end of the first tube segment, and the other end of the third tube segment is connected to the current collector; and
the first insulating member comprises a third insulating portion, the third insulating portion being at least partially arranged between a side of the third tube segment facing away from the bottom wall of the box body and the battery cell assembly.

13. The battery according to claim 12, wherein the third insulating portion wraps around an outer peripheral wall of the third tube segment.

14. The battery according to any one of claims 2 to 13, wherein there is one or a plurality of heat exchange tubes, and when there are a plurality of heat exchange tubes, the plurality of heat exchange tubes are arranged at intervals in the first direction or arranged around each other.

15. The battery according to any one of claims 1 to 14, wherein the bottom wall of the box body has an accommodating groove, the first heat exchange member is at least partially arranged in the accommodating groove, and the first bonding layer at least partially fills the accommodating groove.

16. The battery according to claim 15, wherein an inner surface of the bottom wall of the box body has a mounting region for placing the battery cell assembly;
the battery further comprises: a second insulating member, at least partially arranged in the mounting region excluding the accommodating groove, such that the second insulating member is arranged between the bottom wall of the box body and the battery cell assembly, and the first bonding layer is arranged in the mounting region to cover the second insulating member.

17. The battery according to claim 16, wherein the box body is provided with a first expansion beam and a second expansion beam, the first expansion beam and the second expansion beam are arranged opposite to each other, and each of the first expansion beam and the second expansion beam has a cavity; and
the mounting region is located between the first expansion beam and the second expansion beam, and the battery cell assembly is located between the first expansion beam and the second expansion beam.

18. The battery according to claim 15, wherein a thickness of the first bonding layer at a position excluding the accommodating groove is 0.5 mm to 2 mm.

19. The battery according to any one of claims 1 to 18, wherein a second bonding layer is arranged between a side of the first heat exchange member facing away from the battery cell assembly and the bottom wall of the box body.

20. The battery according to any one of claims 1 to 19, wherein the box body is an integrally stamped member.

21. The battery according to any one of claims 1 to 20, wherein the battery cell assembly comprises a plurality of battery units, each of the battery units comprising a plurality of battery cells, the plurality of battery cells of each of the battery units being arranged in the first direction, the plurality of battery units being arranged in the second direction, and the first direction and the second direction being arranged to form an angle; and
the first heat exchange assembly further comprises a second heat exchange member, the second heat exchange member being arranged between two adjacent battery units.

22. The battery according to any one of claims 1 to 21, wherein the box body assembly further comprises a box cover, the box cover being connected above the box body and having a top wall; and
the first heat exchange assembly further comprises a third heat exchange member, the third heat exchange member being located at least partially between the top wall of the box cover and the battery cell assembly.

23. The battery according to any one of claims 1 to 22, further comprising:
a second heat exchange assembly, the second heat exchange assembly being attached externally to the box body assembly.

24. An electrical apparatus, comprising the battery according to any one of claims 1 to 23.
